(19) Europäisches Patentamt
European Patent Office
Office européen des brevets

(11) **EP 4 773 734 A1**

(12) **EUROPEAN PATENT APPLICATION**
published in accordance with Art. 153(4) EPC

(43) Date of publication:
08.07.2026 Bulletin 2026/28

(21) Application number: 24868736.0

(22) Date of filing: 20.09.2024

(51) International Patent Classification (IPC):
*H05B 6/12* (2006.01)    *H05B 6/06* (2006.01)
*F24C 15/34* (2006.01)    *F24C 15/10* (2006.01)
*F24C 3/12* (2006.01)    *H02M 1/10* (2006.01)

(52) Cooperative Patent Classification (CPC):
F24C 3/12; F24C 15/10; F24C 15/34; H02M 1/10;
H05B 6/06; H05B 6/12

(86) International application number:
PCT/KR2024/014232

(87) International publication number:
WO 2025/063760 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023  KR 20230126657
21.09.2023  KR 20230126658
26.09.2023  KR 20230129155
22.02.2024  KR 20240026117
13.09.2024  KR 20240125413

(71) Applicant: LG Electronics Inc.
Yeongdeungpo-gu
Seoul 07336 (KR)

(72) Inventors:
• PARK, Kyungho
Seoul 08592 (KR)
• KIM, Eui Sung
Seoul 08592 (KR)
• MOON, Hyunwook
Seoul 08592 (KR)

(74) Representative: Vossius & Partner
Patentanwälte Rechtsanwälte mbB
Siebertstraße 3
81675 München (DE)

(54) **COIL ASSEMBLY**

(57)    According to the present invention, disclosed is a coil assembly provided in an induction heating cooking device. The coil assembly comprises: a plurality of heating coil layers having formed therein a plurality of heating coils; and a wiring layer stacked on top of the plurality of heating coil layers and having formed therein heating coil wirings. The plurality of heating coil layers and the wiring layer are formed on the same substrate. According to the present invention, a container may be detected through the heating coils, without using a detection coil, by detecting a change in impedance of the heating coils.

**FIG. 6A**

## Description

## TECHNICAL FIELD

The present disclosure relates to a cooking appliance, and more particularly, to a coil assembly included in an induction heating cooktop.

## BACKGROUND ART

Recently, an induction range using induction heating technology is attracting attention as a next-generation cooking appliance that may replace a gas range due to advantages such as high heating efficiency, fast heating speed, stability, convenience, etc.

An induction heating cooktop product includes an induction heating cooktop having a heating coil composed of a ritz wiring. When an induction-compatible vessel is located at a predetermined burner position, the cooking vessel is heated. This scheme has a disadvantage in that the cooking vessel should be placed only at a predetermined position, and has a disadvantage in that heating efficiency decreases when the position of the cooking vessel is slightly incorrect.

Accordingly, all-free induction heating technology is being developed. This is a technology capable of heating the induction-compatible vessel even when the induction-compatible vessel is positioned not only at a predetermined area of an induction heating top plate but also at various positions thereof, and has the advantage that various sized vessels and a multiple-compartment vessel having three or more compartments may also be heated.

## SUMMARY OF DISCLOSURE

## TECHNICAL PURPOSE

A technical purpose of the present disclosure is to provide a coil assembly in which a heating coil layer having a heating coil formed therein and a wiring layer having a temperature sensor and wirings formed therein are integrated into an integrated PCB pattern assembly.

A technical purpose of the present disclosure is to provide a coil assembly for sensing a cooking vessel using a heating coil.

A technical purpose of the present disclosure is to provide a coil assembly capable of reducing a thickness of the integral PCB pattern assembly.

A technical purpose of the present disclosure is to provide a coil assembly in which wirings of a plurality of heating coils are optimally arranged.

A technical purpose of the present disclosure is to provide a coil assembly that secures space for a plurality of temperature sensors.

A technical purpose of the present disclosure is to provide a coil assembly in which the heating coils are integrated into the integrated PCB pattern assembly, thereby contributing to process simplification.

The purposes to be achieved according to an embodiment of the present specification are not limited to the above-mentioned purposes, and other purposes not mentioned will be clearly understood by those skilled in the art from the following description.

## TECHNICAL SOLUTIONS

A coil assembly according to an embodiment of the present disclosure includes a plurality of heating coil layers, wherein a plurality of heating coils are formed in each of the plurality of heating coil layers, and a wiring layer stacked on top of the stack of the plurality of heating coil layers, wherein wirings of the plurality of heating coils are formed in the wiring layer, wherein the plurality of heating coil layers and the wiring layer are formed on the same substrate.

Specifically, the plurality of heating coils used for vessel sensing and vessel heating are formed in each of the plurality of heating coil layers which are stacked in the vertical direction. A plurality of temperature sensors are disposed in the wiring layer, and wirings of the plurality of temperature sensors and wirings of the plurality of heating coils are disposed in the wiring layer.

A coil assembly according to an embodiment of the present disclosure detects a cooking vessel using the heating coil. Specifically, the coil assembly detects a cooking vessel based on a change in impedance of the heating coil, and detects a change in an oscillation signal according to a change in an equivalent resistance of the heating coil and detects at least one of a position, a size, and a material of the cooking vessel based on the detected change.

In a coil assembly according to an embodiment of the present disclosure, each of the plurality of heating coil layers and the wiring layer has at least one via extending therethrough in a vertical direction, wherein the heating coil and the wiring of the heating coil are connected to each other in the vertical direction using the via.

In the coil assembly according to an embodiment of the present disclosure, wirings of a plurality of heating coils are optimally arranged. Specifically, the wirings extending across an area on top of the heating coils are disposed in the wiring layer, and these wirings connect the heating coils to each other, and connect the heating coil, the heating coil terminal, the temperature sensor, and the connector to each other.

The coil assembly according to an embodiment of the present disclosure secures a space for a plurality of temperature sensors. Specifically, at least one temperature sensor is disposed in the wiring layer and at a position corresponding to each of both opposing sides around the center of the heating coil and at a position between the heating coils arranged in the front-rear direction.

In the coil assembly according to an embodiment of the present disclosure, the plurality of heating coil layers and the wiring layer are formed on the same substrate, thereby contributing to simplification of a process. Specifically, the plurality of heating coils having a layered structure are formed in each of the plurality of heating coil layers, heating coil wirings connecting the plurality of heating coils to each other are formed in the wiring layer, and the plurality of heating coil layers and the wiring layer are formed on the same substrate.

TECHNICAL EFFECT

As described above, the wiring layer in which wirings of the plurality of heating coils are formed is stacked on top of the stack of the plurality of heating coil layers, each having the plurality of heating coils formed therein, such that the wiring layer and the plurality of heating coil layers are formed on the same substrate.

According to the present disclosure, the cooking vessel may be sensed via the heating coil without the sensing coil, based on the sensing result of the change in the impedance of the heating coil.

According to the present disclosure, the change in an oscillation signal according to a change in an equivalent resistance of the heating coil may be sensed, and at least one of a position, a size, and a material of the cooking vessel may be determined based on the sensed change.

According to the present disclosure, the thickness of the coil assembly may be reduced by connecting the heating coil and the wiring of the heating coil to each other in the vertical direction using the via.

According to the present disclosure, the wirings extending across the area on top of the heating coils are disposed in the wiring layer, the heating coils are connected to each other via the wirings, and the heating coil, the heating coil terminal, the temperature sensor, and the connector are connected to each other via the wirings, such that the wirings of the plurality of heating coils are optimally arranged.

According to the present disclosure, the inter-turn area formed in an area in each of both opposing sides around the central area of the pattern of each of the plurality of heating coils has a width greater than a width of the inter-turn area defined between adjacent turns of each heating coil in the area different from the area in each of both opposing sides, wherein the inter-turn area includes different inter-turn areas having smaller and larger widths, wherein the temperature sensor is disposed in the wiring layer and in an area overlapping the inter-turn area having the larger width, thereby securing a space in which the plurality of temperature sensors are disposed.

According to the present disclosure, the plurality of heating coils having a layered structure are formed in the heating coil layer, heating coil wirings connecting the heating coils to each other are formed in the wiring layer, and the heating coil layer and the wiring layer are formed into the integrated coil assembly, thereby contributing to the simplification of processes such as masking, printing, and etching.

According to the present disclosure, the heating coil wiring connecting the heating coils to each other or connecting the heating coil to the terminal is disposed on the wiring layer so as to extend cross the heating coils, such that the optimal wiring route may be implemented.

In addition to the above-described effects, specific effects of the present disclosure will be described together while explaining specific matters for implementing the present disclosure.

**BRIEF DESCRIPTION OF DRAWINGS**

FIG. 1 is an exploded perspective view illustrating an exploded state of a cooktop in a cooking appliance according to an embodiment of the present disclosure.

FIG. 2 is a plan view of the cooktop shown in FIG. 1 and a diagram showing the configuration of the PCB pattern coil assembly.

FIG. 3 is a diagram illustrating a connection structure between heating coils connected in series with each other in a coil assembly according to an embodiment of the present disclosure.

FIG. 4 is a diagram illustrating a connection structure between heating coils connected in series and parallel with each other in a coil assembly according to an embodiment of the present disclosure.

FIG. 5 is a circuit diagram illustrating a connection relationship between heating coils connected in series and parallel with an inverter circuit in a cooking appliance according to an embodiment of the present disclosure.

FIG. 6A is a schematic cross-sectional view illustrating a structure of a coil assembly according to a first embodiment.

FIG. 6B is a plan view of a wiring layer shown in FIG. 6A.

FIG. 7A is a schematic cross-sectional view illustrating a structure of a coil assembly according to a second embodiment.

FIG. 7B is a plan view of a sensing coil layer illustrated in FIG. 7A.

FIG. 8A is a schematic cross-sectional view illustrating a structure of a coil assembly according to a third embodiment.

FIG. 8B is a plan view of the wiring layer shown in FIG. 8A.

FIG. 8C is a plan view of a sensing coil layer illustrated in FIG. 8A.

FIG. 9 is a plan view of first to tenth heating coil layers shown in FIG. 8;

FIG. 10 is a circuit diagram of a cooking vessel detection sensor in a cooking appliance according to an embodiment of the present disclosure.

FIG. 11 is a diagram for illustrating an operation of the cooking vessel detection sensor illustrated in FIG. 10.

FIG. 12 is a diagram illustrating an equivalent resistance variation ratio for each vessel material type based on an oscillation frequency of a cooking vessel detection sensor in a cooking appliance according to an embodiment of the present disclosure.

FIG. 13 is a diagram illustrating a connection relationship between a cooking vessel detection sensor and a controller in a cooking appliance according to an embodiment of the present disclosure.

## DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used to distinguish only one component from another component. Unless otherwise stated, the first component may be the second component.

The present disclosure is not limited to the embodiments disclosed below, but various changes may be applied thereto and the present disclosure may be implemented in various different forms. However, the present embodiment is provided so that the present disclosure is complete and the scope of the present disclosure is fully informed to those skilled in the art. Therefore, the present disclosure is not limited to the embodiments disclosed below, but it should be understood that a configuration of one embodiment and a configuration of another embodiment are substituted with each other or are added to each other, and all changes, equivalents, and substitutes included in the technical spirit and scope of the present disclosure are included in the present disclosure.

The accompanying drawings are only set forth for easy understanding of the embodiments disclosed in the present disclosure, and the technical spirit disclosed in the present disclosure is not limited by the accompanying drawings, and it should be understood that all changes, equivalents, and substitutes included in the spirit and technical scope of the present disclosure are included in the present disclosure. In the drawings, the components may be expressed to be larger or smaller in size or thickness in consideration of convenience of understanding, etc. However, the scope of the present disclosure should not be limited thereto.

The terms used herein are used only to describe specific embodiments or embodiments, and are not intended to limit the present disclosure. As used herein, the singular constitutes "a" and "an" are intended to include the plural constitutes as well, unless the context clearly indicates otherwise In the present disclosure, terms such as "include" and "comprise" are intended to designate that a feature, a number, a step, an operation, a component, a part, or a combination thereof as described in the present disclosure exist. That is, it should be understood that in the present disclosure, the terms such as "include" and "comprise" do not exclude the presence or addition of one or more other features, numbers, steps, operations, components, parts, or combinations thereof.

Terms including ordinals, such as first, second, etc., may be used to describe various components, but the components are not limited by the terms. The terms are used only for the purpose of distinguishing one component from another component.

When it is mentioned that one component is "connected" or "coupled" to another component, it should be understood that one component may be directly connected or coupled to another component, or still another component may be present therebetween. On the other hand, when it is mentioned that one component is "directly connected" or "directly coupled" to another component, it should be understood that still another component is absent therebetween.

When one component is referred to as "being disposed on top of' or "being disposed under" another component, it should be understood that one component may be directly disposed on top of or under another component or still another component may be present therebetween.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a coil assembly and a cooking appliance including the same are disclosed.

Herein, in a state in which the cooking appliance is placed on the floor, a direction toward the front and rear sides around a center of the cooking appliance may be defined as a front-rear direction. A direction orthogonal to the front-rear direction of the cooking appliance may be defined as a left-right direction.

[Overall Structure of Induction Heating Cooktop]

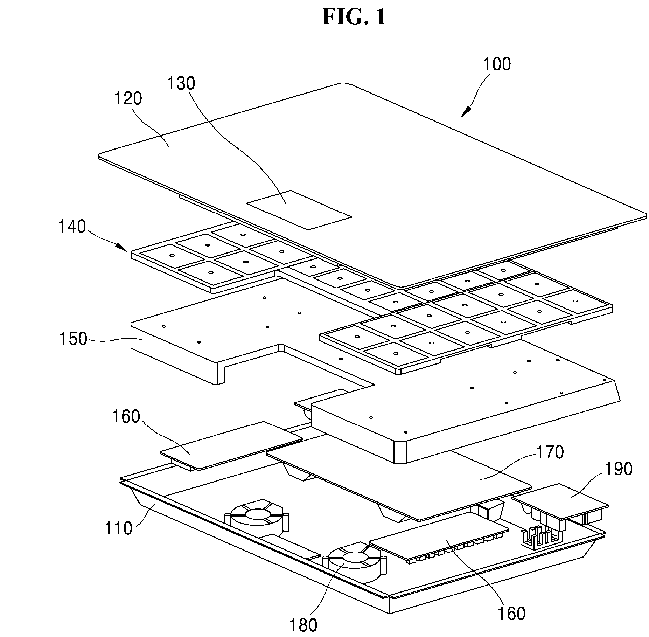

FIG. 1 is an exploded perspective view illustrating an exploded state of an induction heating cooktop 100 in a cooking appliance according to an embodiment of the present disclosure.

The cooking appliance according to an embodiment of the present disclosure may be an oven range type cooking appliance in which the cooktop 100 is disposed in an upper area and an oven is disposed in a lower area. The present disclosure is not limited thereto, and the cooking appliance according to an embodiment of the present disclosure may be embodied as a cooking appliance in which the cooktop 100 is provided alone.

Referring to FIG. 1, the cooking appliance according to an embodiment of the present disclosure includes the induction heating cooktop 100. The induction heating cooktop 100 may include a casing 110 and a top plate 120.

According to the present embodiment, an exterior of the cooktop 100 may be defined by the casing 110 and the top plate 120. The casing 110 may be disposed under the top plate 120, and may constitute a front surface, a rear surface, a side surface, and a bottom surface of the cooktop 100. The top plate 120 may be disposed at a top of the cooktop 100 and may constitute an outer appearance of an upper surface of the cooktop 100. The top plate 120 may be made of ceramic glass for mounting a cooking vessel thereon.

An accommodation space may be formed inside the casing 110. The accommodation space formed inside the casing 110 may be opened upwardly. In an example, the casing 110 may be formed in a hexahedral shape with an open upper side. In the accommodation space surrounded with the top plate 120 and the casing 110, various internal components constituting the cooktop 100 may be accommodated.

In addition, an integrated PCB pattern coil assembly 140 may be disposed under the top plate 120 in the cooktop 100. In the PCB pattern coil assembly 140, a plurality of heating coil layers and a wiring layer may be integrally formed with each other, wherein in each of the plurality of heating coil layers, at least one heating coil for heating a cooking vessel is disposed in a layered structure, and in the wiring layer, wirings connecting the heating coils to each other are disposed.

In one example, the PCB pattern coil assembly 140 may include a plurality of PCB pattern coil assemblies according to a size of the top plate 120 of the cooktop 100. In one example, when the top plate 120 is divided into three areas including a left area, a central area, and a right area, three PCB pattern coil assemblies 140 may be respectively disposed under the corresponding areas. The PCB pattern coil assemblies 140 may be formed in different sizes to be suitable for the sizes of the left area, the central area, and the right area, respectively. Each of the PCB pattern coil assemblies 140 corresponding to each area may independently operate.

In the PCB pattern coil assembly 140, the heating coil for induction heating, a temperature sensor for sensing a temperature, a terminal and a wiring for connection thereof with other components, etc. may be integrally formed with each other. The PCB pattern coil assembly 140 may be divided into a plurality of unit blocks. In an example, one heating coil may be disposed in one unit block. In an example, at least two temperature sensors may be disposed in one unit block. In an example, two temperature sensors may be disposed between adjacent unit blocks.

In addition, in the cooktop 100, a supporter 150 may be disposed under the PCB pattern coil assembly 140. The supporter 150 may constitute a skeleton inside the cooktop 100 so as to support various internal components constituting the cooktop 100. In an example, the supporter 150 may be formed in a hexahedral shape with an open lower side. In one example, the supporter 150 may be formed in a shape substantially identical with a shape obtained by turning the casing 110 upside down, and may be formed to have a slightly smaller size than that of the casing 110.

According to the present embodiment, the accommodation space may be formed inside the supporter 150, and may be formed as a space surrounded by the bottom portion of the casing 110 and the supporter 150. Various internal components constituting the cooktop 100 may be accommodated in the supporter 150.

In one example, a resonant PCB assembly 160 in which capacitors used for resonance or oscillation are mounted, an inverter PCB assembly 170 in which a switching element for applying a current to the heating coil for induction heating, etc. are mounted, a fan 180 for cooling down the internal components, an EMI filter 190 for filtering and blocking various noises mixed with each other on electrical power, and a control PCB assembly in which a controller for controlling the overall operation of the cooktop 100 and circuits for sensing the cooking vessel are mounted may be accommodated in the supporter 190.

According to the present embodiment, the supporter 150 may also provide a base function for the PCB pattern coil assembly 140. More specifically, a ferrite core may be installed on an upper surface of the supporter 150, the PCB pattern coil assembly 140 may be installed on top of the ferrite core, and the top plate 120 may be installed on top of the PCB pattern coil assembly 140.

In addition, the cooktop 100 may include a control panel 130. The control panel 130 may be disposed on one area of an upper surface of the top plate 120. The control panel 130 may include a UI (user interface) including an adjustment icon for adjusting an operation of the cooktop 100 in a touch manner and a display for displaying an operation state of the cooktop 100.

[PCB Pattern Coil Assembly]

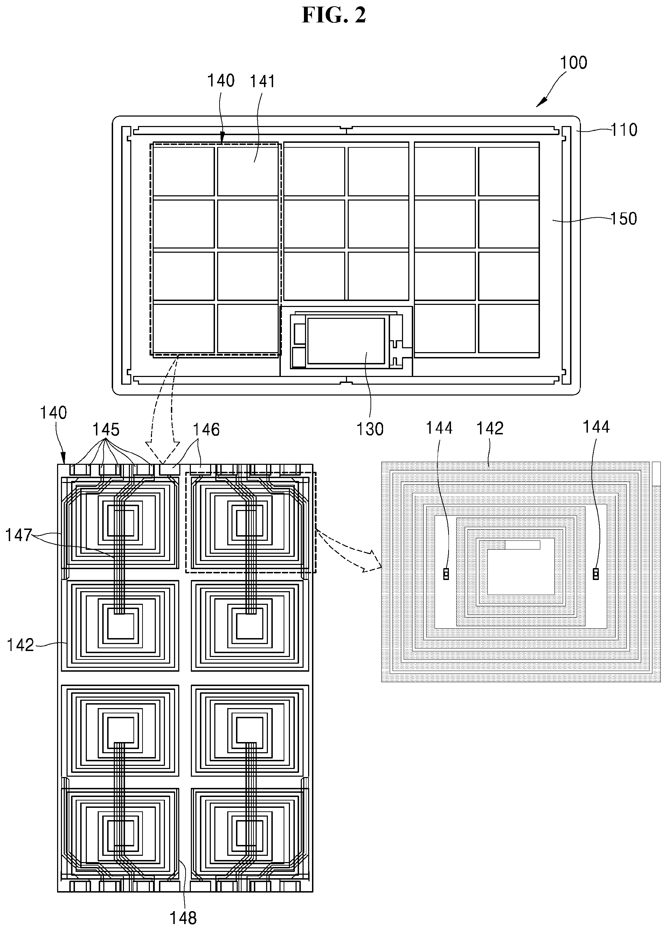

FIG. 2 is a plan view of the cooktop 100 illustrated in FIG. 1 and a diagram illustrating a configuration of the PCB pattern coil assembly 140.

Referring to FIG. 2, a coil assembly according to an embodiment of the present disclosure includes a substrate and a plurality of heating units disposed on the substrate. The coil assembly may be referred to as the PCB pattern coil assembly 140, and the heating unit may be referred to as a heating coil 142.

A plurality of heating coils 142 are formed in a rotating pattern and are electrically connected to each other via at least two layers. The pattern of the plurality of heating coils 142 is constructed such that a plurality of turns is disposed in one layer, an inter-turn area is formed between adjacent ones of the plurality of turns, and a temperature sensor 144 is disposed in another layer and in an area corresponding to the inter-turn area.

A central area without a pattern is formed in the center of the plurality of heating coils 142. An inter-turn area formed in an area in each of both opposing sides around the central area of the pattern of each of the plurality of heating coils 142 has a width greater than a width of the inter-turn area between the turns of the heating coil 142 in the area different from the area in each of both opposing sides. The temperature sensor 144 is disposed in another layer and in an area corresponding to the inter-turn area formed in the area in each of both opposing sides around the central area of the plurality of heating coils 142.

The temperature sensors 144 are disposed to be spaced apart from each other by a predetermined distance. In one example, the heating coil 142 and the temperature sensor 144 may be formed on the same substrate. In another example, the heating coil 142 and the temperature sensor 144 may be formed on different substrates. The substrate on which the heating coil 142 is formed and the substrate on which the temperature sensor 144 is formed may be electrically connected to each other via a terminal.

A non-pattern area may be formed in one heating unit area of the plurality of heating coils 142. A non-pattern area may be formed in a boundary area between adjacent ones of the plurality of heating units.

The temperature sensor 144 may be disposed in the non-pattern area in the area of the heating coil 142. The temperature sensor 144 may not be disposed in a left-right boundary area of a boundary area between the heating coils. The temperature sensor 144 may be disposed in a front-rear boundary area of the boundary area between the heating units.

At least four and at most six temperature sensors 144 may be disposed in the non-pattern area of the two heating coils 142 arranged side by side in the left-right or front-rear direction. In this regard, the temperature sensor 144 may not be disposed in the boundary area between the heating coils 142 arranged side by side in the left-right direction.

When four heating units are arranged in series or in parallel with each other, at least 12 and at most 14 temperature sensors 144 may be disposed in the non-pattern area of the heating coil 142 area. In this regard, the temperature sensor 144 may not be disposed in a boundary area between the heating coils arranged side by side in the left-right directions.

The heating coil 142 may include a first heating coil WC1 and a second heating coil WC2 disposed adjacent to each other in the front-rear direction, and a third heating coil WC3 and a fourth heating coil WC4 respectively disposed adjacent to the first heating coil WC1 and the second heating coil WC2 in the left-right direction.

Two sensing coils may be disposed in an area of each of the first heating coil WC1 and the second heating coil WC2. Two sensing coils may be disposed in a boundary area between the first heating coil WC1 and the second heating coil WC2.

Two sensing coils may be disposed in an area of each of the third heating coil WC3 and the fourth heating coil WC4. Two sensing coils may be disposed in a boundary area between the third heating coil WC3 and the fourth heating coil WC4. The sensing coil may not be disposed in a boundary area between the first heating coil WC1 and the second heating coil WC2 and in a boundary area between the third heating coil WC3 and the fourth heating coil WC4.

The cooktop 100 may include the casing 110, the supporter 150, and the PCB pattern coil assembly 140. The PCB pattern coil assembly 140 may include the heating coil 142 for heating the cooking vessel of the cooktop 100, wirings 147 for connecting the heating coils to each other and for connecting the heating coil to a terminal 145, the temperature sensor 144, and wirings for connecting the temperature sensor 144 to a connector 146. The PCB pattern coil assembly 140 may be disposed in an accommodation space inside the cooktop 100.

The supporter 150 may be disposed on top of the casing 110, the PCB pattern coil assembly 140 may be disposed on top of the supporter 150, and the top plate 120 may be disposed on top of the PCB pattern coil assembly 140.

The PCB pattern coil assembly 140 may include a plurality of PCB pattern coil assemblies according to the size and shape of the cooktop 100. In the present embodiment, the cooktop 100 may be divided into a left area, a central area, and a right area, and each of the PCB pattern coil assemblies 140 may be disposed in each of the left area, the central area, and the right area.

Each of the PCB pattern coil assemblies 140 may be divided into a plurality of unit blocks 141. The plurality of unit blocks 141 may be arranged in a matrix form. In one example, at least one heating coil 142 may be disposed in one unit block 141. In one example, at least two temperature sensors 144 may be disposed in one unit block 141. In addition, at least two temperature sensors 144 may be disposed between one unit block 141 and another unit block 141.

Each heating coil 142 formed in the PCB pattern coil assembly 140 may be formed in a pattern form. In one example, the heating coil 142 may be formed in a polygonal pattern, for example, a square pattern, a rectangular pattern, or a hexagonal pattern. Alternatively, the heating coil 142 may be formed in an annular pattern.

In addition, at least one heating coil terminal 145, at least one connector 146, at least one heating coil wiring 147, at least one sensing wiring 148, and at least one via may be formed in the PCB pattern coil assembly 140. The heating coil terminal 145 is electrically connected to the heating coil 142 via the heating coil wiring 147, and is electrically connected to the resonant PCB assembly 160 and the inverter PCB assembly 170. The connector 146 is electrically connected to the temperature sensor 144 via the sensing wiring 148, and is electrically connected to the control PCB assembly.

The PCB pattern coil assembly 140 may include a plurality of heating coil layers, and a wiring layer. The heating coil 142 is formed in a pattern in each of the plurality of heating coil layers. A wiring is formed in a pattern in the wiring layer. In one example, the plurality of heating coil layers may include 10 to 12 heating coil layers, and the respective heating coils 142 of the different layers may be electrically connected to each other via the via. In one example, the wiring layer may be formed as a single layer, may be disposed on top of a stack of the plurality of heating coil layers, and the heating coil 142 and the heating coil wiring may be electrically connected to each other via the via.

In addition, the heating coil layer may be provided in a form in which a heating coil is patterned on each of both opposing surfaces of the substrate. In the present embodiment, the heating coil 142 may be patterned on each of both opposing surfaces of the heating coil layer, the temperature sensor 144 may be disposed on an upper surface of the wiring layer, and the heating coil wiring and the temperature sensor wiring may be patterned on at least one of both opposing surfaces of the wiring layer.

In the present embodiment, an example in which two temperature sensors 144 are disposed inside each heating coil 142 formation area, and two temperature sensors 144 are disposed between two heating coils 142 adjacent to each other in the front-rear direction is set forth.

In one example, the PCB pattern coil assembly 140 may be provided in a form in which the heating coil 142, the heating coil wiring 147, the temperature sensor 144, and the sensing wiring 148 are integral with each other.

In one example, the integrated PCB pattern coil assembly 140 may include 10 heating coil layers, each heating coil layer including a heating coil pattern and being formed in a layered structure, one wiring layer including a wiring pattern and a temperature sensor and formed in a layered structure, and an insulating material disposed between the heating coil layers and between the heating coil layer and the wiring layer to insulate them from each other. The insulating material may be formed by curing a prepreg composed of a thermosetting resin and glass fiber which is generally used to form a printed circuit board. In an example, the thermosetting resin that may be applied is preferably an epoxy resin-based resin, and specifically, FR-4 may be applied as the prepreg.

As described above, the insulating material made of the prepreg may be disposed between the heating coil layers, each being formed in a layered structure, and may serve to insulate the heating coil layers from each other. In addition, the insulating material may be constructed to fill an area in which no pattern such as the heating coil pattern and the wiring pattern, and may serve to form a layered structure of an individual layer.

As described above, according to the present disclosure, the heating coil, the heating coil wiring, the temperature sensor, and the sensing wiring may be integrated into the integrated PCB pattern coil assembly, thereby contributing to simplification of the process such as masking, printing, etching, and the like.

[Connection Structure between Heating Coils of PCB Pattern Coil Assembly]

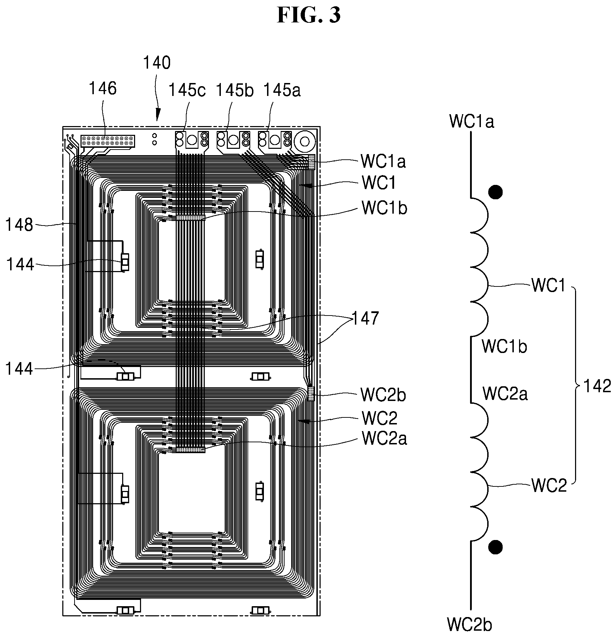

FIG. 3 is a diagram illustrating a connection structure between heating coils connected in series with each other in a coil assembly according to an embodiment of the present disclosure. In one example, a connection relationship between the first heating coil WC1 and the second heating coil WC2 is illustrated.

Referring to FIG. 3, the PCB pattern coil assembly 140 includes the first heating coil WC1, the second heating coil WC2, a first heating coil terminal 145a, a second heating coil terminal 145b, a third heating coil terminal 145c, the temperature sensor 144, and the connector 146.

The first heating coil WC1 is formed in a pattern in which it winds from an outer terminal WCla toward an inner terminal WC1b in a clockwise direction. The outer terminal WC1a of the first heating coil WC1 is connected to the first heating coil terminal 145a via a wiring. A current is applied to the first heating coil terminal 145a. The current applied to the first heating coil terminal 145a flows in a clockwise direction along the pattern in the form of the first heating coil WC1.

The second heating coil WC2 is formed in a pattern in which it winds from an inner terminal WC2a toward an outer terminal WC2b in a counterclockwise direction. The outer terminal WC2b of the second heating coil WC2 is connected to the second heating coil terminal 145b via a wiring. A ground voltage is applied to the second heating coil terminal 145b. The second heating coil WC2 is connected in series to the first heating coil WC1. The current of the second heating coil WC2 flows in a counterclockwise manner along the pattern of the second heating coil WC2.

The first heating coil WC1 and the second heating coil WC2 are connected in series with each other. In one example, the first heating coil WC1 and the second heating coil WC2 are connected in series with each other via a wiring extending across the first heating coil WC1 and the second heating coil WC2 and positioned at a central line thereof. The inner terminal WC1b of the first heating coil WC1 and the inner terminal WC2a of the second heating coil WC2 are connected to the third heating coil terminal 145c via a wiring extending across the first heating coil WC1 and the second heating coil WC2 and positioned at a central line thereof.

Among spacings between the patterns of the first heating coil WC1, a spacing in which the temperature sensor 144 is disposed may be greater than a spacing in which the temperature sensor 144 is not disposed. In addition, a spacing between the first heating coil WC1 and the second heating coil WC2 may be equal to or greater than a predetermined distance so that the temperature sensor 144 may be disposed therein. Among the spacings between the patterns of the first heating coil WC1 or the second heating coil WC2, the spacing in which the temperature sensor 144 is disposed and the spacing between the first heating coil WC1 and the second heating coil WC2 may be set to be equal to each other.

The first heating coil terminal 145a, the second heating coil terminal 145b, and the third heating coil terminal 145c are disposed at one side of the PCB pattern coil assembly 140. For example, the third heating coil terminal 145c is disposed at one side in the front-rear direction of the PCB pattern coil assembly 140, and the first heating coil terminal 145a and the second heating coil terminal 145b are disposed at the right side around the third heating coil terminal 145c.

In addition, the connector 146 is disposed at one side in the front-rear direction of the PCB pattern coil assembly 140 as the first heating coil terminal 145a, the second heating coil terminal 145b, and the third heating coil terminal 145c are. The connector 146 is disposed at the left side around the third heating coil terminal 145c.

Alternatively, the first heating coil terminal 145a and the second heating coil terminal 145b may be disposed at the left side around the third heating coil terminal 145c, and the connector 146 may be disposed at the right side around the third heating coil terminal 145c.

The first heating coil terminal 145a is connected to an output terminal of an inverter circuit provided in the inverter PCB assembly 170. A first resonance capacitor may be further connected to and disposed between the first heating coil terminal 145a and the output terminal of the inverter circuit. The current applied from the inverter circuit resonates at a resonance frequency determined based on the first heating coil WC1 and the first resonance capacitor, and is supplied to the first heating coil WC1 via the first heating coil terminal 145a.

The current of the first heating coil WC1 flows in a clockwise manner along the pattern of the first heating coil WC1 turning from an outer area to a center of an inner area in the clockwise direction.

The second heating coil terminal 145b is connected to a ground voltage terminal. A second resonance capacitor may be further connected to and disposed between the second heating coil terminal 145b and the ground voltage terminal.

The first heating coil terminal 145a, the first heating coil WC1, the second heating coil WC1, and the second heating coil terminal 145b constitute a current path. The resonant current output from the inverter circuit flows through the first heating coil terminal 145a, the first heating coil WC1, the second heating coil WC1, and the second heating coil terminal 145b. In this regard, the current of the first heating coil WC1 flows in the clockwise direction, and the current of the second heating coil WC2 flows in the counterclockwise direction.

The patterns of the first heating coil WC1 and the second heating coil WC2 may be formed such that a direction in which the current flows in first heating coil WC1 and a direction in which the current flows in the second heating coil WC2 are opposite to each other, such that a magnetic field generated from the first heating coil WC1 and a magnetic field generated from the second heating coil WC2 cancel each other out. The first heating coil WC1 and the second heating coil WC2 may be connected in anti-series with each other such that the magnetic field generated from the first heating coil WC1 and the magnetic field generated from the second heating coil WC2 cancel each other out. The magnetic field generated from the first heating coil WC1 and the magnetic field generated from the second heating coil WC2 cancel each other out, thereby generating a magnetic field in the cooking vessel under the electromagnetic induction. The magnetic field generated under the electromagnetic induction causes the eddy currents flowing in the cooking vessel to superimpose each other, such that the superimposition of eddy currents in the cooking vessel increases the heating performance and efficiency of the cooking appliance.

The third heating coil terminal 145c is connected to the first heating coil WC1 and the second heating coil WC2 via a wiring extending across the first heating coil WC1 and the second heating coil WC2 and positioned at a central line thereof. The third heating coil terminal 145c is disposed at one side of the PCB pattern coil assembly 140 so as to be connected to the centers of the first heating coil WC1 and the second heating coil WC2.

The first heating coil terminal 145a and the second heating coil terminal 145b may be disposed at the right side around the third heating coil terminal 145c. Alternatively, the first heating coil terminal 145a and the second heating coil terminal 145b may be disposed at the left side around the third heating coil terminal 145c.

The connector 146 may be disposed at the left side around the third heating coil terminal 145c. Alternatively, the connector 146 may be disposed at the right side around the third heating coil terminal 145c. The connector 146 may have multiple connection ports. The plurality of temperature sensors 144 may be respectively connected to corresponding connection ports of the connector 146 via respective sensing wirings 148.

The outer terminal WC1a of the first heating coil WC1 is connected to the first heating coil terminal 145a, and the inner terminal WC1b of the first heating coil WC1 is connected to the third heating coil terminal 145c via the heating coil wiring 147 extending across the first heating coil WC1 and positioned at a central line thereof. Through this connection structure, the heating coil wiring connected to the first heating coil terminal 145a and the outer terminal WC1a of the first heating coil WC1 and the heating coil wiring connected to the second heating coil terminal 145b and the outer terminal WC2b of the second heating coil WC2 have an optimal arrangement structure.

The third heating coil terminal 145c is connected to the inner terminal of the first heating coil WC1 and the inner terminal of the second heating coil WC2 via the heating coil wiring 147 extending across the first heating coil WC1 and the second heating coil WC2 and positioned at a central line thereof, and is disposed in one side of the PCB pattern assembly 140. This connection and arrangement structure implements an optimal wiring route.

The first heating coil terminal 145a and the second heating coil terminal 145b are disposed at the left or right side around the third heating coil terminal 145c. This arrangement structure may secure a space for the wirings of the plurality of heating coils 142 and the wirings of the plurality of temperature sensors 144.

In addition, the first heating coil terminal 145a and the second heating coil terminal 145b connected to each of the first heating coil WC1 and the second heating coil WC2 connected in series with each other are disposed in the same side of the PCB pattern assembly 140, thereby securing a space in which the wirings of the plurality of heating coils 142 and the wirings of the plurality of temperature sensors 144 are disposed.

[Connection Relationship between Inverter Circuit and Heating Coil]

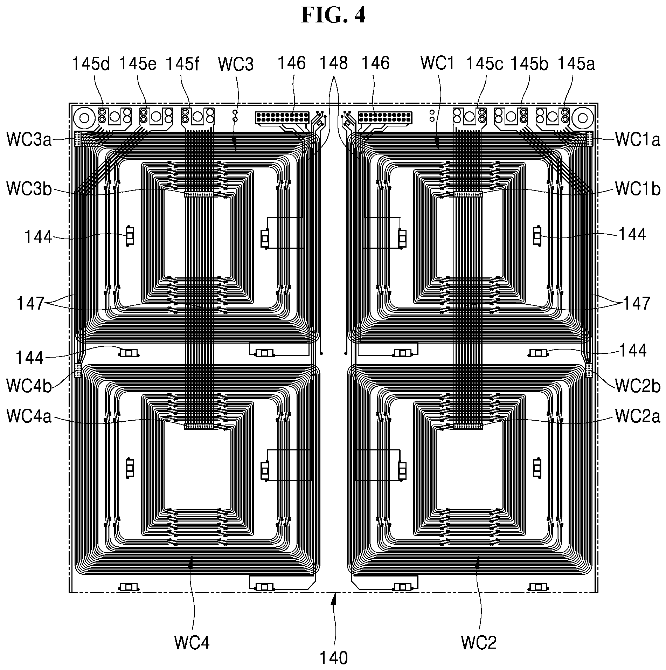

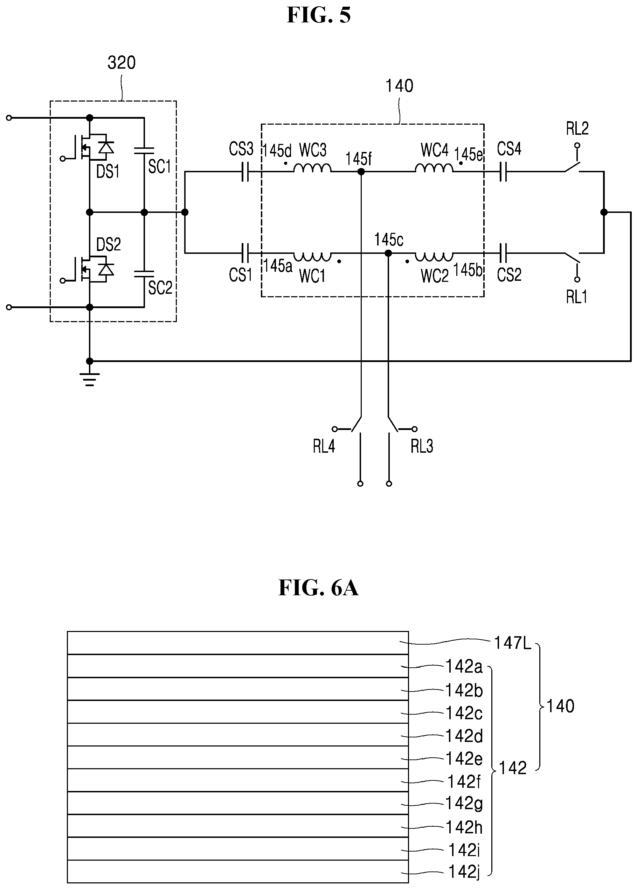

FIG. 4 is a diagram showing a connection structure between heating coils connected in series and parallel with each other in a cooking appliance according to an embodiment of the present disclosure. In one example, FIG. 4 illustrates a connection relationship between the first heating coil WC1, the second heating coil WC2, the third heating coil WC3, and the fourth heating coil WC4. FIG. 5 is a circuit diagram illustrating a connection relationship between heating coils connected in series and parallel with an inverter circuit in a cooking appliance according to an embodiment of the present disclosure.

Referring to FIGS. 4 and 5, the PCB pattern coil assembly 140 includes the first heating coil WC1, the second heating coil WC2, the third heating coil WC3, and the fourth heating coil WC4.

The first heating coil WC1 is connected to the first heating coil terminal 145a and is formed in a pattern in which it winds from the outer area toward the center of the inner area in a clockwise direction. The second heating coil WC2 is connected to the second heating coil terminal 145b, and is formed in a pattern in which it winds from the outer area toward the center of the inner area in a counterclockwise direction.

The third heating coil WC3 is connected to the fourth heating coil terminal 145d and is formed in a pattern in which it winds from the outer area toward the center of the inner area in a counterclockwise direction. The fourth heating coil WC4 is connected to the fifth heating coil terminal 145e and is formed in a pattern in which it winds from the outer area toward the center of the inner area in a clockwise direction.

The first heating coil WC1 and the second heating coil WC2 are connected in series with each other, and the third heating coil WC3 and the fourth heating coil WC4 are connected in series with each other. The series of the first heating coil WC1 and the second heating coil WC2 connected in series with each other, and the series of the third heating coil WC3 and the fourth heating coil WC4 connected in series are connected in parallel to each other.

In one example, the inner terminal WC1b of the first heating coil WC1 and the inner terminal WC2a of the second heating coil WC2 are connected in series with each other via a heating coil wiring extending across the first heating coil WC1 and the second heating coil WC2 and .

The inner terminal WC3b of the third heating coil WC3 and the inner terminal WC4a of the fourth heating coil WC4 are connected in series with each other via a heating coil wiring extending across the center of the third heating coil WC3 and the fourth heating coil WC4 and positioned at a central line thereof.

The first heating coil WC1 and the third heating coil WC3 are connected to the output terminal of the inverter circuit via the first heating coil terminal 145a and the fourth heating coil terminal 145d. The second heating coil WC2 and the fourth heating coil WC4 are connected to the ground voltage terminal via the second heating coil terminal 145b and the fifth heating coil terminal 145e.

The first heating coil WC1 receives the current supplied from the inverter circuit via the first heating coil terminal 145a. In this regard, the current of the first heating coil WC1 flows in a clockwise direction along the heating coil pattern turning from the outer area to the center of the inner area in a clockwise direction.

The second heating coil WC2 receives the current supplied from the first heating coil WC1 via the inner terminal. In this regard, the current of the second heating coil WC2 flows in the counterclockwise direction along the heating coil pattern turning from the center of the inner area to the outer area in the counterclockwise direction.

The third heating coil WC3 receives the current supplied from the inverter circuit 320 via the fourth heating coil terminal 145d. In this regard, the current of the third heating coil WC3 flows in the counterclockwise direction along the heating coil pattern turning from the outer area toward the center of the inner area in the counterclockwise direction.

The fourth heating coil WC4 receives the current supplied from the third heating coil WC3 via the inner terminal. In this regard, the current of the fourth heating coil WC4 flows in a clockwise direction along the heating coil pattern turning in a clockwise manner from the center of the inner area toward the outer area.

As described above, the current flows in the first heating coil WC1 in the direction opposite to the direction in which the current flows in the second heating coil WC2 adjacent thereto in the front-rear direction and in the direction opposite to the direction in which the current flows in the third heating coil WC3 adjacent thereof in the left-right direction. In addition, the current flows in the fourth heating coil WC4 in the direction opposite to the direction in which the current flows in the third heating coil WC3 adjacent thereto in the front-rear direction and in the direction opposite to the direction in which the current flows in the second heating coil WC2 adjacent thereto in the left-right direction.

In addition, the first heating coil WC1 and the second heating coil WC2 are connected in anti-series with each other. The third heating coil WC3 and the fourth heating coil WC4 are connected in anti-series with each other.

In addition, the PCB pattern coil assembly 140 includes the first heating coil terminal 145a, the second heating coil terminal 145b, the third heating coil terminal 145c, a fourth heating coil terminal 145d, a fifth heating coil terminal 145e, and a sixth heating coil terminal 145f. In addition, the PCB pattern coil assembly 140 further includes the heating coil wiring 147, the sensing wiring 148, the plurality of temperature sensors 144, and the connector 146.

The first heating coil terminal 145a, the second heating coil terminal 145b, the third heating coil terminal 145c, the fourth heating coil terminal 145d, the fifth heating coil terminal 145e, the sixth heating coil terminal 145f, and the connector 146 are disposed in one side of the PCB pattern coil assembly 140.

In one example, the first heating coil terminal 145a and the second heating coil terminal 145b are disposed at the right side around the third heating coil terminal 145c, and the connector 146 is disposed at the left side around the third heating coil terminal 145c. The fourth heating coil terminal 145d and the fifth heating coil terminal 145e are disposed at the left side around the sixth heating coil terminal 145f, and the connector 146 is disposed at the right side around the sixth heating coil terminal 145f.

In addition, the cooking appliance includes a rectifier circuit (not shown), an inverter circuit 320, a plurality of resonant capacitors CS1, CS2, CS3, and CS4, a plurality of heating coils WC1, WC2, WC3, and WC4, and a plurality of relays RL1, RL2, RL3, and RL4.

The rectifier circuit converts an AC voltage having the magnitude and polarity (positive voltage or negative voltage) varying over time, into a DC voltage having a constant magnitude and polarity, and converts an AC current having the magnitude and direction (positive current or negative current) varying over time, into a DC current having a constant magnitude, and provides the DC voltage and DC current to the inverter circuit 320.

The inverter circuit 320 receives the input voltage from the rectifier circuit, and switches the first switching element DS1 and the second switching element DS2 to supply current to the resonance capacitor and the heating coil under the control of the controller. In this regard, the current output from the inverter circuit 320 resonates at a resonance frequency determined according to the capacitance value of the resonance capacitor and the inductance value of the heating coil.

The inverter circuit 320 may include a first inverter circuit and a second inverter circuit. The first inverter circuit may supply current to the first to fourth heating coils WC1, WC2, WC3, and WC4, and the second inverter circuit may supply current to the fifth to eighth heating coils. At least one of the first to fourth heating coils WC1, WC2, WC3, and WC4 and the fifth to eighth heating coils may be selectively connected in series or in parallel with each other via at least one of the first to fourth relays RL1, RL2, RL3, and RL4.

The inverter circuit 320 includes a plurality of switching elements, for example, a first switching element DS1 and a second switching element DS2. The first switching element DS1 and the second switching element DS2 are connected in series to each other and are disposed between and connected to a high potential voltage terminal and a low potential voltage terminal. The inverter circuit 320 outputs a current according to the switching operation of the first switching element DS1 and the second switching element DS2.

The inverter circuit 320 supplies a resonance current to the first heating coil WC1 and the second heating coil WC2 or the third heating coil WC3 and the fourth heating coil WC4 according to the switching operation of the first switching element DS1 and the second switching element DS2. The resonance frequency of the resonance current is determined based on the inductance value of the heating coil and the capacitance value of the resonance capacitor.

The first switching element DS1 and the second switching element DS2 may be alternately turned on and off under the control of the controller. The turn-on and turn-off in the alternate manner of the first switching element DS1 and the second switching element DS2 may be referred to as switching operation of the first switching element DS1 and the second switching element DS2.

The resonance current is generated under the switching operation of the first switching element DS1 and the second switching element DS2, a magnetic field is generated when the resonance current is supplied to the heating coil, and an eddy current flows in a cooking vessel provided on top of the heating coil under the electromagnetic induction to heat the cooking vessel.

The inverter circuit 320 further includes a first snubber capacitor SC1 and a second snubber capacitor SC2. The first snubber capacitor SC1 is connected in parallel to the first switching element DS1, and the second snubber capacitor SC2 is connected in parallel to the second switching element SW2. The first snubber capacitor SC1 and the second snubber capacitor SC2 are connected to each other in series.

The first snubber capacitor SC1 and the second snubber capacitor SC2 serve to reduce power loss due to hard switching occurring when the first switching element DS1 and the second switching element DS2 are turned off.

The inverter circuit 320 supplies a current to a load circuit according to the switching operation of the first switching element DS1 and the second switching element DS2. The load circuit includes the plurality of heating coils WC1, WC2, WC3 and WC4, the plurality of resonance capacitors CS1, CS2, CS3 and CS4, and the plurality of relays RL1, RL2, RL3 and RL4.

The first resonance capacitor CS1 may be further connected to and disposed between the output terminal of the inverter circuit 320 and the first heating coil WC1. In addition, the second resonance capacitor CS2 and a first relay RL1 may be further connected to and disposed between the second heating coil WC2 and the ground voltage terminal.

In addition, the third resonance capacitor CS3 may be further connected to and disposed between the output terminal of the inverter circuit 320 and the third heating coil WC3. In addition, the fourth resonance capacitor CS4 and a second relay RL2 may be further connected to and disposed between the fourth heating coil WC4 and the ground voltage terminal.

In addition, the third relay RL3 may be further connected to and disposed between the third heating coil terminal 145c and other heating coils of the PCB pattern coil assembly 140. In addition, the fourth relay RL4 may be further connected to and disposed between the sixth heating coil terminal 145f and other heating coils of the PCB pattern coil assembly 140.

The resonant capacitors CS1, CS2, CS3, and CS4 may be used to filter a DC component from an output current of the inverter circuit 320. The heating coils WC1, WC2, WC3, and WC4 may be used to heat the cooking vessel using electromagnetic induction. In addition, the heating coils WC1, WC2, WC3, and WC4 may be used to sense the cooking vessel seated on the top plate. In one example, the cooking vessel may be detected based on a detecting result of a change in impedances of the heating coils WC1, WC2, WC3, and WC4.

The relays RL1, RL2, RL3, and RL4 may be used to selectively connect the heating coils WC1, WC2, WC3, and WC4 and other heating coils driven by another inverter circuit in series or in parallel with each other. In addition, the resonance frequency of the output current of the inverter circuit 320 may be determined according to inductance values of the heating coils WC1, WC2, WC3, and WC4 selectively connected in series or in parallel with each other and capacitance values of the resonance capacitors CS1, CS2, CS3, and CS4.

The load circuit may include the first resonance capacitor CS1 for transmitting the resonance current supplied from the inverter circuit 320, the first heating coil WC1 connected in series to the first resonance capacitor CS1, the second heating coil WC2 connected in series to the first heating coil WC1, the second resonance capacitor CS2 connected in series to the second heating coil WC2, and the first relay RL1 for switching the connection or disconnection between the second resonance capacitor CS2 and the ground voltage terminal.

In addition, the load circuit may further include the third resonance capacitor CS3 for transmitting the resonance current supplied from the inverter circuit 320, the third heating coil WC3 connected in series to the third resonance capacitor CS3, the fourth heating coil WC4 connected in series to the third heating coil WC3, the fourth resonance capacitor CS4 connected in series to the fourth heating coil WC4, and the second relay RL2 for switching the connection or disconnection between the fourth resonance capacitor CS4 and a ground voltage terminal.

In addition, the load circuit may further include the third relay RL3 for switching connection or disconnection between a node between the first heating coil WC1 and the second heating coil WC2 and other heating coils driven by another inverter circuit. In addition, the load circuit may further include the fourth relay RL4 for switching connection or disconnection between a node between the third heating coil WC3 and the fourth heating coil WC4 and other heating coils driven by another inverter circuit.

The first to fourth relays RL1, RL2, RL3, and RL4 may be selectively turned on based on the size of the cooking vessel. In one example, when the first relay RL1 and the third relay RL 3 are turned on, a current may flow through the first heating coil WC1, the second heating coil WC 3, and another heating coil. In this regard, the direction in which the current flows along the first heating coil WC1 and the direction in which the current flows along the second heating coil WC2 are opposite to each other. The direction in which the current flows along the second heating coil WC2 and the direction in which the current flows along another heating coil are opposite to each other.

In addition, for example, when the second relay RL2 and the fourth relay RL 4 are turned on, a current may flow through the third heating coil WC 3, the fourth heating coil WC 4, and other heating coils. In this regard, the direction in which the current flows along the third heating coil WC3 and the direction in which the current flows along the fourth heating coil WC4 are opposite to each other. The direction in which the current flows along the fourth heating coil WC2 and the direction in which the current flows along the seventh heating coil WC7 are opposite to each other.

At least one of the first relay RL1, the second relay RL2, the third relay RL3, and the fourth relay RL4 may be turned on based on the size of the cooking vessel to form a current path. In one example, when the first relay RL1 is turned on, the direction in which the current flows in first heating coil WC1 and the direction in which the current flows in the second heating coil WC2 are opposite to each other, such that a magnetic field generated from the first heating coil WC1 and a magnetic field generated from the second heating coil WC2 cancel each other out. The magnetic field generated from the first heating coil WC1 and the magnetic field generated from the second heating coil WC2 cancel each other out, thereby generating a magnetic field in the cooking vessel under the electromagnetic induction. The magnetic field generated under the electromagnetic induction causes the eddy currents flowing in the cooking vessel to superimpose each other, such that the superimposition of eddy currents in the cooking vessel increases the heating performance and efficiency of the cooking appliance.

When the first relay RL1 and the second relay RL2 are turned on, the direction in which the current flows in first heating coil WC1 and the direction in which the current flows in the second heating coil WC2 are opposite to each other, such that a magnetic field generated from the first heating coil WC1 and a magnetic field generated from the second heating coil WC2 cancel each other out, and the direction in which the current flows in the third heating coil WC3 and the direction in which the current flows in the fourth heating coil WC4 are opposite to each other, such that a magnetic field generated from the third heating coil WC3 and a magnetic field generated from the fourth heating coil WC4 cancel each other out, and The magnetic field generated under the electromagnetic induction causes the eddy currents flowing in the cooking vessel to superimpose each other, such that the superimposition of eddy currents in the cooking vessel increases the heating performance and efficiency of the cooking appliance.

As described above, according to the present disclosure, the heating coils connected in series with each other are connected with each other in the anti-series with each other, the heating coils adjacent to each other in the left-right direction are connected with each other in the anti-series with each other, and the heating coils adjacent to each other in the front-rear direction are connected with each other in the anti-series with each other, such that the magnetic fields generated therefrom cancel each other out. This causes the eddy currents flowing in the cooking vessel to superimpose each other, such that the superimposition of eddy currents in the cooking vessel increases the heating performance and efficiency of the cooking appliance.

[Stack Structure and Connection Structure of PCB Pattern Assembly]

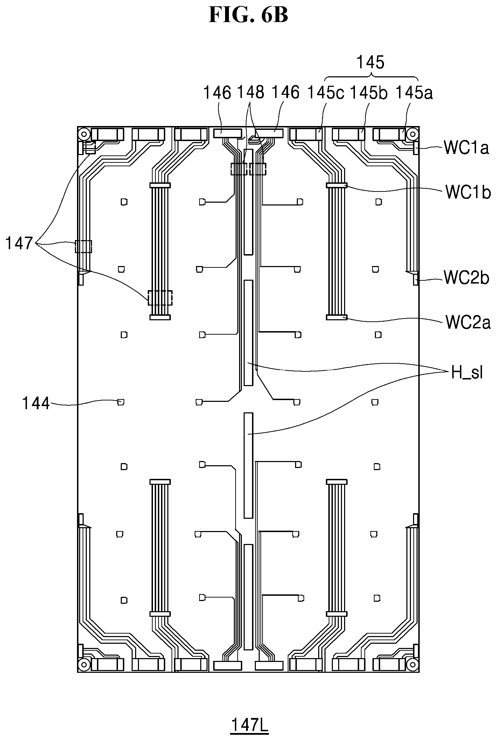

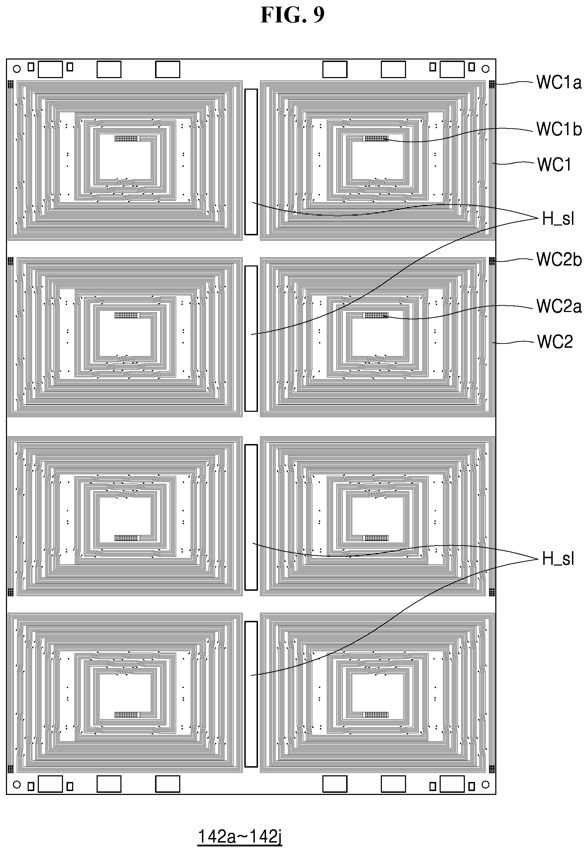

FIG. 6A is a schematic cross-sectional view for illustrating a structure of an integrated PCB pattern assembly in a cooking appliance according to a first embodiment. FIG. 6B is a plan view of a wiring layer shown in FIG. 6A. FIG. 9 is a plan view of the first to tenth heating coil layers as shown in FIG. 6A.

Referring to FIGS. 6A, 6B, and 9, the integrated PCB pattern assembly 140 in the cooking appliance according to the first embodiment includes a plurality of heating coil layers 142a, 142b, 142c, 142d, 142e, 142f, 142g, 142h, 142i, and 142j and a wiring layer 147L. The cooking appliance according to the first embodiment detects a cooking vessel using a change in impedance of the heating coil.

The heating coil 142 used for vessel sensing and vessel heating is formed in each of the plurality of heating coil layers 142a, 142b, 142c, 142d, 142e, 142f, 142g, 142h, 142i, and 142j, and the plurality of heating coil layers 142a, 142b, 142c, 142d, 142e, 142f, 142g, 142h, 142i, and 142j are stacked on top of each other in the vertical direction.

The wiring layer 147L is stacked on top of the stack of the plurality of heating coil layers 142a, 142b, 142c, 142d, 142e, 142f, 142g, 142h, 142i, and 142j, and the temperature sensor 144 is disposed in the wiring layer 147L, and the sensing wiring 148 and the heating coil wiring 147 are formed in the wiring layer 147L. The sensing wiring 148 connects each of the plurality of temperature sensors 144 disposed in the wiring layer 147L to the connector 146. The heating coil wiring 147 connects the plurality of heating coils disposed in each of the plurality of heating coil layers 142a, 142b, 142c, 142d, 142e, 142f, 142g, 142h, 142i, and 142j to the heating coil terminal 145.

In one example, the PCB pattern assembly 140 may include first to tenth heating coil layers 142a, 142b, 142c, 142d, 142e, 142f, 142g, 142h, 142i, and 142j and the wiring layer 147L.

The first to tenth heating coil layers 142a, 142b, 142c, 142d, 142e, 142f, 142g, 142h, 142i, and 142j are stacked on top of each other in the vertical direction. The plurality of heating coils are formed in each of the first to tenth heating coil layers 142a, 142b, 142c, 142d, 142e, 142f, 142g, 142h, 142i, and 142j.

The wiring layer 147L is stacked on top of the stack of the first to tenth heating coil layers 142a, 142b, 142c, 142d, 142e, 142f, 142g, 142h, 142i, and 142j. The plurality of temperature sensors 144 are disposed in the wiring layer. The plurality of temperature sensors 144 may be connected to the connector 146 via the sensing wiring 148 disposed on the upper surface or the back surface of the wiring layer 147L.

The heating coil wiring 147 connecting the heating coils to each other or connecting the heating coils to the heating coil terminal 145 is disposed in the wiring layer 147L. The first to tenth heating coil layers 142a, 142b, 142c, 142d, 142e, 142f, 142g, 142h, 142i, and 142j and the wiring layer 147L may include at least one via extending in the vertical direction. The heating coil and the wiring of the heating coil may be electrically connected to each other in the vertical direction using the via.

The temperature sensors 144 may be disposed in the wiring layer 147 and respectively at positions corresponding to both opposing sides around the center of the heating coil, and at least one temperature sensors 144 may be disposed in the wiring layer 147 and at a position between the heating coils disposed adjacent to each other in the front-rear direction.

Each of the first to tenth heating coil layers 142a, 142b, 142c, 142d, 142e, 142f, 142g, 142h, 142i, and 142j may include first to eighth heating coils, each having a layered structure.

The first heating coil WC1 is formed in a pattern in which it winds from the outer area to the inner area in a clockwise direction. The second heating coil WC2 is connected in series to the first heating coil WC1 and is formed in a pattern in which it winds from the inner area to the outer area in a counterclockwise direction.

The third heating coil WC3 is disposed adjacent to the first heating coil WC1 in the left-right direction, and is formed in a pattern in which it winds from the outer area to the inner area in a counterclockwise direction. The fourth heating coil WC4 is connected in series to the third heating coil WC3, and is formed in a pattern in which it winds from the inner area to the outer area in a clockwise direction. The fifth to eighth heating coils may be arranged in a pattern symmetrical to the first to fourth heating coils.

Each of the first to tenth heating coil layers 142a, 142b, 142c, 142d, 142e, 142f, 142g, 142h, 142i, and 142j and the wiring layer 147L includes the first outer terminal WC1a connected to the outer area of the first heating coil WC1, the first inner terminal WC1b connected to another one adjacent thereto in the vertical direction and connected to the inner area of the first heating coil WC1, the second outer terminal WC2b connected to another one adjacent thereto in the vertical direction and connected to the outer area of the second heating coil WC2, and the second inner terminal WC2a connected to another one adjacent thereto in the vertical direction and connected to the inner area of the second heating coil. Each of the first to tenth heating coil layers 142a, 142b, 142c, 142d, 142e, 142f, 142g, 142h, 142i, and 142j and the wiring layer 147L are electrically connected to the first outer terminal WCla, the first inner terminal WC1b, the second outer terminal WC2b, and the second inner terminal WC2a via the heating coil wiring 147.

The respective first outer terminals WC1a in the first to tenth heating coil layers 142a, 142b, 142c, 142d, 142e, 142f, 142g, 142h, 142i, and 142j and the wiring layer 147L are connected to each other in the vertical direction via at least one via. The respective first inner terminals WC1b in the first to tenth heating coil layers 142a, 142b, 142c, 142d, 142e, 142f, 142g, 142h, 142i, and 142j and the wiring layer 147L are connected to each other in the vertical direction via at least one via. The respective second inner terminals WC2a in the first to tenth heating coil layers 142a, 142b, 142c, 142d, 142e, 142f, 142g, 142h, 142i, and 142j and the wiring layer 147L are connected to each other in the vertical direction via at least one via. The respective second outer terminals WC2b in the first to tenth heating coil layers 142a, 142b, 142c, 142d, 142e, 142f, 142g, 142h, 142i, and 142j and the wiring layer 147L are connected to each other in the vertical direction via at least one via.

The first heating coil terminal 145a, the second heating coil terminal 145b, the third heating coil terminal 145c, and the connector 146 are disposed in one side in the front-rear direction of the wiring layer 147L.

The first heating coil terminal 145a is connected to the output terminal of the inverter circuit, and the second heating coil terminal 145b is connected to the ground voltage terminal. The third heating coil terminal 145c is connected to and disposed between the other heating coils. The connector 146 is connected to the cooking vessel sensing circuit. The cooking vessel sensing circuit detects a change in equivalent resistance and equivalent inductance of the heating coil, and detects at least one of the presence or absence of the cooking vessel and the material according to the change value.

The first heating coil terminal 145a and the first outer terminal WC1a are connected to each other via a first heating coil wiring disposed in one side of the wiring layer 147a. The second heating coil terminal 145b and the second outer terminal WC2b are connected to each other via a second heating coil wiring extending across one side area of the wiring layer 147L. The first inner terminal WC1b and the second inner terminal WC2a are connected to each other via a third heating coil wiring extending across the wiring layer 147L and positioned at the center thereof, and connected to the third heating coil terminal 145 c.

The temperature sensor 144 is further disposed in the wiring layer 147L. the sensing wiring 148 connecting the temperature sensor 144 to the connector 146 is further disposed in the wiring layer 147L.

The first heating coil terminal 145a and the second heating coil terminal 145b may be disposed in the wiring layer 147L and at the right side or the left side around the third heating coil terminal 145c. The connector 146 may be disposed in the wiring layer 147L and at the left side or the right side around the third heating coil terminal 145c.

In addition, for example, each of the first to fifth heating coil layers 142a, 142b, 142c, 142d, and 142e may be constructed such that the heating coil pattern is formed in each thereof, and has a first type pattern constructed such that a traveling direction or a winding direction of individual pattern strands is a first direction. In addition, in an example, each of the sixth to tenth heating coil layers 142f, 142g, 142h, 142i, and 142j may be constructed such that the heating coil pattern is formed in each thereof and has a second type pattern constructed such that the traveling direction or the winding direction of the individual pattern strands is the second direction different from the first direction.

In this case, the first to third heating coil wirings formed in the wiring layer 147L, the heating coil patterns of the first type pattern disposed in the first to fifth heating coil layers 142a, 142b, 142c, 142d, and 142e, and the heating coil patterns of the second type pattern disposed in the sixth to tenth heating coil layers 142f, 142g, 142h, 142i, and 142j may be collectively connected to each other via the vias continuously extending through the wiring layer 147L to the first to tenth heating coil layers 142a to 142j.

In addition, the insulating layer may be further formed between adjacent ones of the first to tenth heating coil layers 142a, 142b, 142c, 142d, 142e, 142f, 142g, 142h, 142i, and 142j and between the first heating coil layer 142a and the wiring layer 147L.

In addition, the PCB pattern assembly 140 may include a light-transmissive slit hole H_sl extending through the wiring layer 147a to the first to tenth heating coil layers 142a, 142b, 142c, 142d, 142e, 142f, 142g, 142h, 142i, and 142j.

A light source module may be disposed under the light-transmissive slit hole H_sl, and visible light generated from the light source module may pass through the light-transmissive slit hole and be irradiated to a lower surface of the top plate. As a result, a display line extending linearly may be formed in the top plate.

In order to implement the display line extending linearly, the light-transmissive slit hole H_sl may extend linearly in a corresponding manner to a shape of the display line DL. However, as illustrated, in order to prevent the rigidity of the PCB pattern assembly 140 from being rapidly degraded, the light-transmissive slit hole H_sl may be divided into a plurality of light-transmissive slit holes, and the divided light-transmissive slit holes H_sl may be linearly arranged.

As described above, in the cooking appliance according to an embodiment of the present disclosure, the wiring layer having the wirings formed therein may be stacked on top of the heating coil layer having the heating coil formed therein such that the PCB pattern assembly may be formed in an integrated manner.

According to the present disclosure, a thickness of the integrated PCB pattern assembly may be reduced by connecting the heating coil and the wiring of the heating coil to each other in the vertical direction using the via.

According to the present disclosure, the wirings extending across the heating coil are disposed in the wiring layer, the heating coils are connected to each other via the wirings, and the heating coil, the heating coil terminal, the temperature sensor, and the connector are connected to each other using the wirings, such that the wirings of the plurality of heating coils may be optimally arranged.

According to the present disclosure, the temperature sensors are disposed in the wiring layer and respectively disposed at the positions corresponding to both opposing sides around the center of the heating coil, and the at least one temperature sensor is disposed in the wiring layer and at the position between the heating coils disposed adjacent to each other in the front-rear direction, thereby securing a space in which the plurality of temperature sensors are disposed.

According to the present disclosure, the plurality of heating coils, each having the layered structure, are formed in the heating coil layer, the heating coil wirings connecting the heating coils to each other are formed in the wiring layer, and the heating coil layer and the wiring layer are formed into the integrated PCB pattern assembly, thereby contributing to the simplification of processes such as masking, printing, and etching.

According to the present disclosure, the heating coil wiring connecting the heating coils to each other or connecting the heating coil to the terminal may be disposed in the wiring layer so as to extend across the heating coils, such that the optimal wiring route may be implemented.

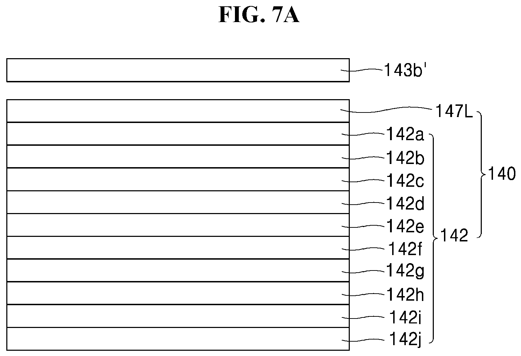

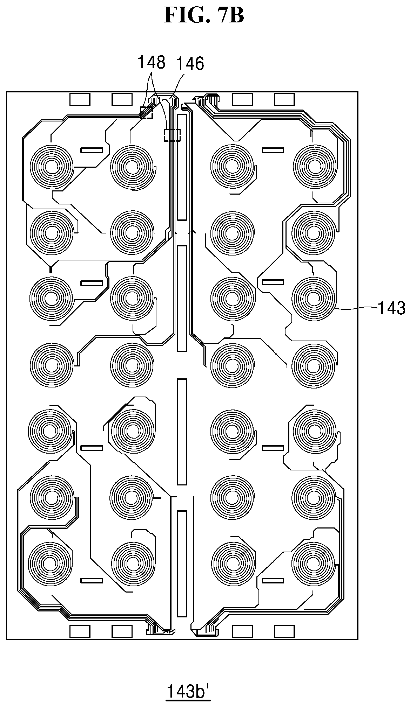

FIG. 7A is a schematic cross-sectional view for illustrating a structure of an integrated PCB pattern assembly in a cooking appliance according to a second embodiment. FIG. 7B is a plan view of a sensing coil layer illustrated in FIG. 7A.

Referring to FIGS. 7A and 7B, the cooking appliance according to the second embodiment includes the plurality of heating coil layers 142a, 142b, 142c, 142d, 142e, 142f, 142g, 142h, 142i, and 142j, the wiring layer 147L, and a sensing coil layer 143b'. The plurality of heating coil layers 142a, 142b, 142c, 142d, 142e, 142f, 142g, 142h, 142i, and 142j and the wiring layer 147L are formed into the integral PCB pattern assembly 140, and the sensing coil layer 143b' is disposed on top of the wiring layer 147L. The cooking appliance according to the second embodiment detects the cooking vessel using a plurality of sensing coils formed in the sensing coil layer 143b'.

The description of the plurality of heating coil layers 142a, 142b, 142c, 142d, 142e, 142f, 142g, 142h, 142i, and 142j and the wiring layer 147L is replaced with the description of FIGS. 6A and 6A.

A plurality of sensing coils 143 and a sensing wiring 148 are disposed in the sensing coil layer 143b'. The plurality of sensing coils 143 are connected to the connector 146 via the sensing wiring 148. FIG. 7A illustrates one sensing coil layer 143b'. However, the present disclosure is not limited thereto. The sensing coil layer may include at least two layers.

In the sensing coil layer 143b', two sensing coils 143 may be disposed in an area overlapping one heating coil. In addition, two sensing coils 143 may be disposed in the sensing coil layer and in an area overlapping an area between adjacent heating coils.

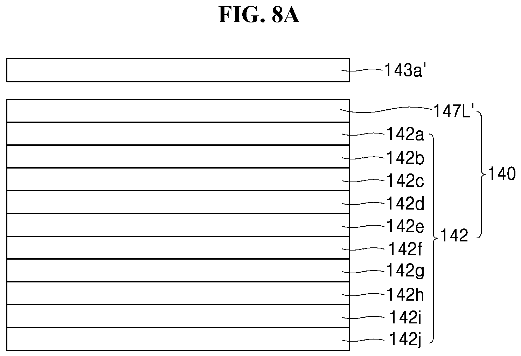

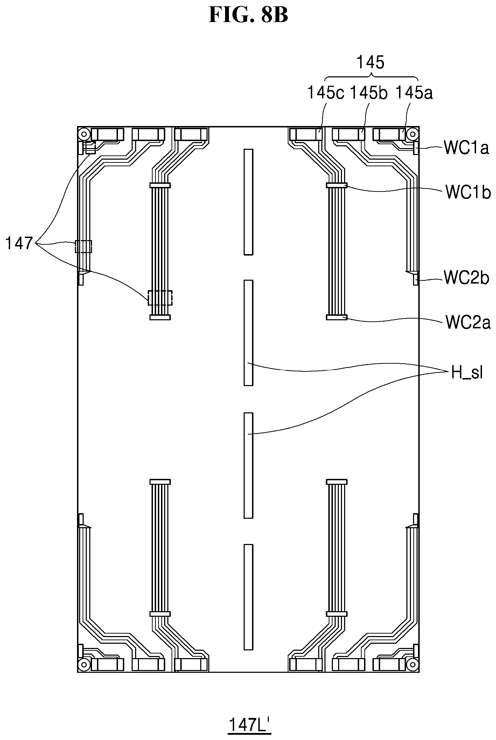

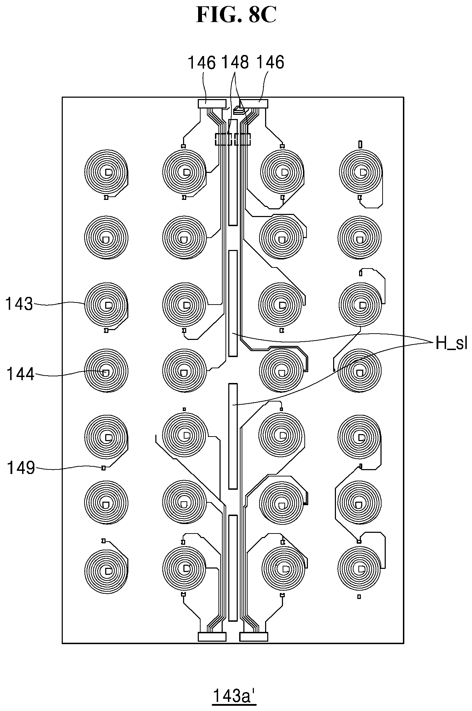

FIG. 8A is a schematic cross-sectional view for illustrating a structure of an integrated PCB pattern assembly in a cooking appliance according to a third embodiment. FIG. 8B is a plan view of the wiring layer shown in FIG. 8A. FIG. 8C is a plan view of a sensing coil layer illustrated in FIG. 8A.

Referring to FIGS. 8A to 8C, the cooking appliance according to the third embodiment includes a plurality of heating coil layers 142a, 142b, 142c, 142d, 142e, 142f, 142g, 142h, 142i, and 142j, a wiring layer 147L', and a sensing coil layer 143a'.

The plurality of heating coil layers 142a, 142b, 142c, 142d, 142e, 142f, 142g, 142h, 142i, and 142j and the wiring layer 147L' are formed into the integral PCB pattern assembly 140, and the sensing coil layer 143a' is disposed on top of the wiring layer 147L'. The cooking appliance according to the third embodiment detects the cooking vessel using a plurality of sensing coils formed in the sensing coil layer 143a'. The difference between each of the first embodiment and the second embodiment and the third embodiment is that the temperature sensor 144 is disposed in the sensing coil layer 143a'.

The description of the plurality of heating coil layers 142a, 142b, 142c, 142d, 142e, 142f, 142g, 142h, 142i, and 142j is replaced with the description of FIGS. 6A and 6B.

The heating coil wiring 147 connecting the heating coils to each other or connecting the heating coils to the heating coil terminal 145 is disposed in the wiring layer 147L'. Each of the first to tenth heating coil layers 142a, 142b, 142c, 142d, 142e, 142f, 142g, 142h, 142i, and 142j and the wiring layer 147L' may include at least one via extending in the vertical direction. The heating coils and the heating coil wirings having the layered structures adjacent to each other in the vertical direction may be connected to each other using the vias.

The respective first outer terminals WC1a of the first to tenth heating coil layers 142a, 142b, 142c, 142d, 142e, 142f, 142g, 142h, 142i, and 142j and the wiring layer 147L adjacent to each other in the vertical direction are connected to each other using at least one via. The respective first inner terminals WC1b of the first to tenth heating coil layers 142a, 142b, 142c, 142d, 142e, 142f, 142g, 142h, 142i, and 142j and the wiring layer 147L adjacent to each other in the vertical direction are connected to each other using at least one via. The respective second inner terminals WC2a of the first to tenth heating coil layers 142a, 142b, 142c, 142d, 142e, 142f, 142g, 142h, 142i, and 142j and the wiring layer 147L adjacent to each other in the vertical direction are connected to each other using at least one via. The respective second outer terminals WC2b of the first to tenth heating coil layers 142a, 142b, 142c, 142d, 142e, 142f, 142g, 142h, 142i, and 142j and the wiring layer 147L adjacent to each other in the vertical direction are connected to each other using at least one via. The first heating coil terminal 145a, the second heating coil terminal 145b, and the third heating coil terminal 145c are disposed in one side in the front-rear direction of the wiring layer 147L.

The plurality of sensing coils 143 and the sensing wiring 148 are disposed in the sensing coil layer 143a'. The plurality of sensing coils 143 are connected to the connector 146 via the sensing wiring 148. FIG. 8C illustrates one sensing coil layer 143a'. However, the present disclosure is not limited thereto. The sensing coil layer may include at least two layers, the sensing coil may be formed in the upper surface or the back surface thereof, and the sensing coils 143 may be electrically connected to each other using a via 149.

In the sensing coil layer 143a', two sensing coils 143 may be disposed in the area overlapping one heating coil. In addition, two sensing coils 143 may be disposed in the sensing coil layer 143a' and in the area overlapping the area between adjacent heating coils.

In addition, in the sensing coil layer 143a', each of the temperature sensors 144 may be disposed in the center of each of the sensing coils 143. The sensing coil 143 and the temperature sensor 144 may be connected to the connector 146 disposed in one side of the sensing coil layer 143a' via the sensing wiring 148.

[Vessel Detection Sensor and Overall Operation of Vessel Detection]

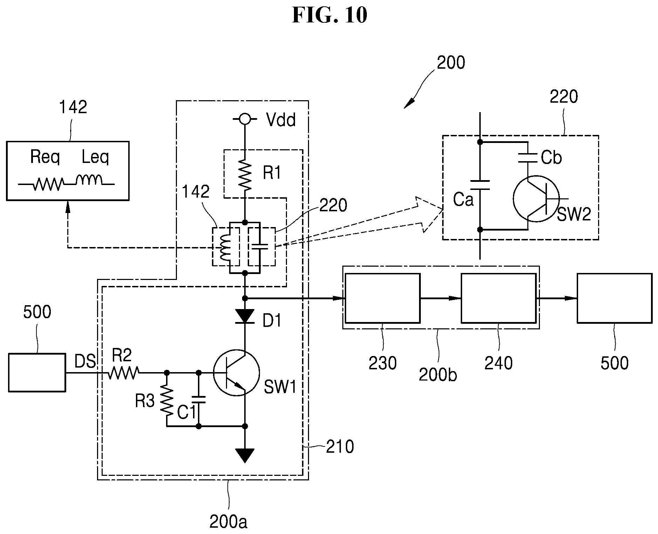

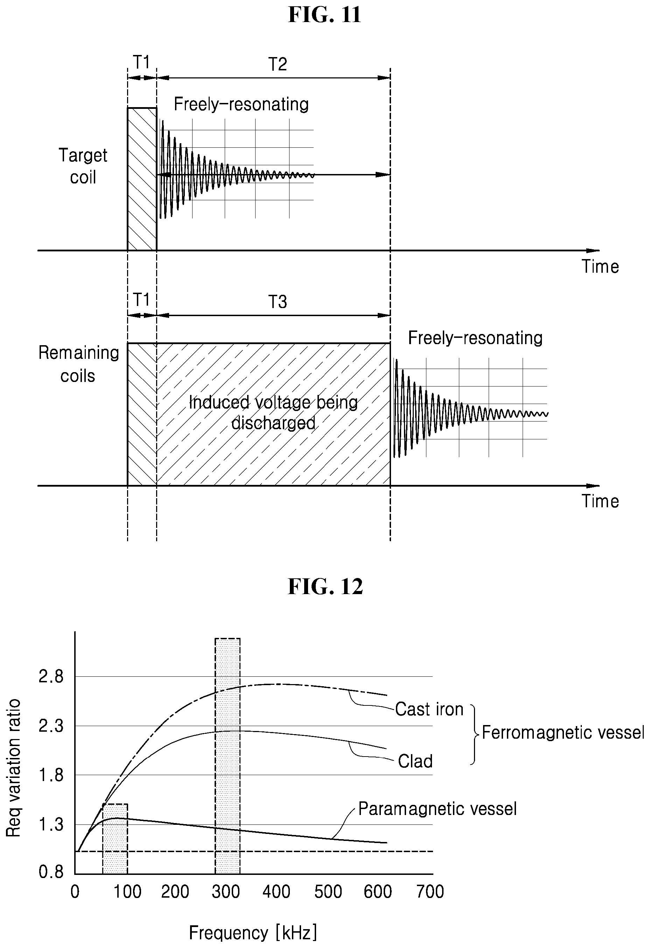

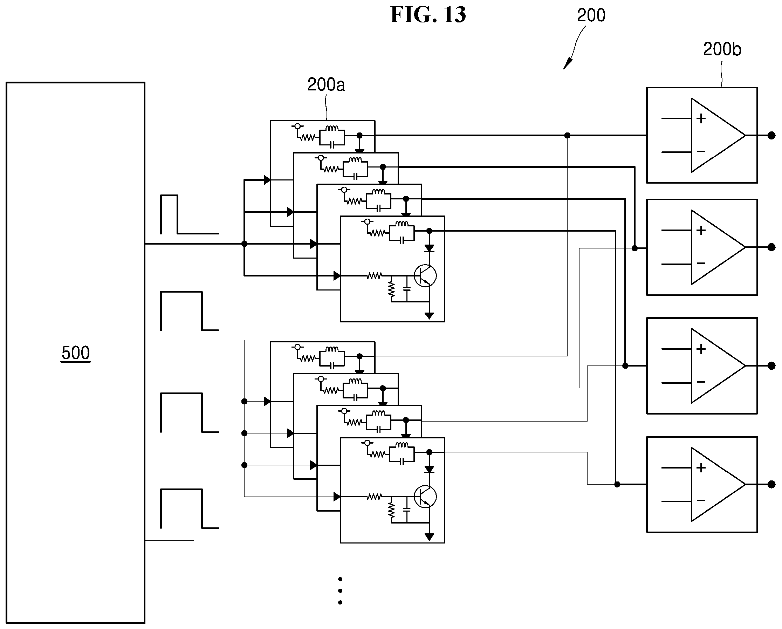

FIG. 10 is a circuit diagram of a cooking vessel detection sensor in a cooking appliance according to an embodiment of the present disclosure. FIG. 11 is a diagram for illustrating an operation of the cooking vessel detection sensor illustrated in FIG. 10. FIG. 12 is a diagram illustrating a cooking vessel material type-specific equivalent resistance variation ratio based on an oscillation frequency of a cooking vessel detection sensor in a cooking appliance according to an embodiment of the present disclosure. FIG. 13 is a diagram illustrating a connection relationship between a cooking vessel detection sensor and a controller in a cooking appliance according to an embodiment of the present disclosure.

FIGS. 10 to 13 illustrate that a cooking vessel detection sensor 200 detects the cooking vessel using the plurality of heating coils 142 disposed in the heating coil layer in the cooking appliance according to the first embodiment. However, the present disclosure is not limited thereto. In the cooking appliance according to the second to third embodiments, the cooking vessel detection sensor 200 may detect the cooking vessel using the plurality of sensing coils 143 disposed in the sensing coil layer.

Referring to FIGS. 10 to 13, the cooking appliance according to an embodiment of the present disclosure includes the cooking vessel detection sensor 200 and a controller 500. The cooking vessel detection sensor 200 detects the cooking vessel mounted on the top plate 120 of the cooktop 100 and provides a cooking vessel sensing signal according to the sensing to the controller 500. The controller 500 controls the operation of the cooking vessel detection sensor 200, and determines vessel information including at least one of the position, material, shape, and size of the cooking vessel, based on the cooking vessel sensing signal received from the cooking vessel detection sensor 200.

The cooking vessel detection sensor 200 includes a cooking vessel sensing circuit 200a and a sensing output circuit 200b. The cooking vessel sensing circuit 200a stores oscillation energy in the heating coil 142 or outputs an oscillation signal that freely resonates, according to a driving signal DS of the controller 500. The sensing output circuit 200b filters the DC component from the oscillation signal received from the cooking vessel sensing circuit 200a, compares the filtered oscillation signal with a reference signal, and outputs the cooking vessel sensing signal according to the comparison result to the controller 500.

In the present embodiment, the cooking vessel sensing circuit 200a includes the heating coil 142, an oscillation circuit 220, and an oscillation driving circuit 210.

When the cooking vessel is mounted on the top plate 120 of the cooktop 100, the heating coil 142 is electromagnetically coupled to the cooking vessel to generate an equivalent resistance Req and an equivalent inductance Leq. As described above, the heating coil 142 is formed in a multi-layered pattern and includes a plurality of heating coils.

The oscillation circuit 220 is electrically connected to the heating coil 142 to generate an oscillation signal that resonates at an oscillation frequency determined based on the inductance of the heating coil 142 and the capacitance of the oscillation capacitor. The oscillation circuit 220 may be connected in parallel to the heating coil 142. The oscillation circuit 220 may include at least one oscillation capacitor. In the present embodiment, the oscillation circuit 220 is illustrated as including two oscillation capacitors Ca and Cb.

The oscillation circuit 220 may include a first oscillation capacitor Ca, a second oscillation capacitor Cb, and an adjustment switch SW2. The first oscillation capacitor Ca is connected in parallel to the heating coil 142, the second oscillation capacitor Cb is connected in parallel to the first oscillation capacitor Ca, and the adjustment switch SW2 is connected in parallel to the first oscillation capacitor Ca and connected in series to the second oscillation capacitor Cb. The adjustment switch SW2 is used to adjust the oscillation frequency.

The adjustment switch SW2 may be turned on or off under the control of the controller 500. When the adjustment switch SW2 is turned off, the oscillation frequency is determined based on the inductance of the sensing coil 143 and the capacitance of the first oscillation capacitor Ca. The oscillation frequency at which the adjustment switch SW2 is turned on is determined based on the inductance of the heating coil 142 and the capacitances of the first oscillation capacitor Ca and the second oscillation capacitor Cb.

The oscillation circuit 220 adjusts the oscillation frequency of the oscillation signal by adjusting the capacitance value according to the switching operation of the adjustment switch SW2. The adjustment of the oscillation frequency may increase the variation ratio of the equivalent resistance Req based on the material type of the cooking vessel when the cooking vessel detection sensor 200 determines the vessel material type, for example, the magnetic vessel and the non-magnetic vessel, or the ferromagnetic vessel and the paramagnetic vessel, thereby improving the determination performance of the vessel material type.

The oscillation driving circuit 210 includes a driving switch SW1, and drives the heating coil 142 and the oscillation circuit 220 such that the heating coil 142 stores oscillation energy or the oscillation circuit 220 outputs the oscillation signal to the sensing output circuit 200b according to the operation of the driving switch SW1. When the driving switch SW1 is turned on, oscillation energy resulting from the power voltage Vdd is stored in the heating coil 142. When the driving switch SW1 is turned off, the oscillation energy stored in the heating coil 142 freely resonates using the oscillation circuit 220, and is output as the oscillation signal that freely resonates at the oscillation frequency.

In the present embodiment, the oscillation driving circuit 210 includes a first resistor R1, a first diode D1, the driving switch SW1, a second resistor R2, a third resistor R3, and a first capacitor C1.

The first resistor R1 has one end connected to the power voltage Vdd terminal and the other end connected to the sensing coil 143 and the oscillation circuit 220. The first resistor R1 acts as a current limit resistor and drops the power voltage Vdd. The first diode D1 has an anode electrode connected to the sensing coil 143 and the oscillation circuit 220, and a cathode electrode connected to the driving switch SW1. The first diode D1 transmits the power from the sensing coil 143 and the oscillation circuit 220 to the driving switch SW1, and blocks noise that may be introduced from the driving switch SW1, for example, surge power.

The driving switch SW1 has a first electrode connected to the cathode electrode of the first diode D1, a second electrode connected to the ground voltage, and a gate electrode connected to a terminal receiving the driving signal DS. The driving switch SW1 is turned on or off based on the driving signal DS received from the controller 500.

The second resistor R2 is connected to and disposed between the terminal receiving the driving signal DS and the gate electrode of the driving switch SW1. The third resistor R3 and the first capacitor C1 are connected in parallel with each other and disposed between and connected to the gate electrode of the driving switch SW1 and the ground voltage terminal. When the driving signal DS is received from the controller 500, the second resistor R2, the third resistor R3, and the first capacitor C1 maintain the potential level of the driving signal DS at the turn-on level of the driving switch SW1.

The oscillation driving circuit 210 may include an output node that outputs an oscillation signal that freely resonates when the driving switch SW1 is turned off. The output node may be formed between one side of the heating coil 142 and the oscillation circuit 220 and the anode electrode of the first diode D1.

In the present embodiment, the sense output circuit 200b includes a DC blocking circuit 230 and a comparison circuit 240. The DC blocking circuit 230 blocks the DC signal included in the oscillation signal and outputs only the oscillation signal that resonates. The comparison circuit 240 compares the oscillation signal with the reference signal, and outputs the cooking vessel sensing signal according to the comparison result to the controller *500.*

The controller 500 determines at least one of the cooking vessel position and the cooking vessel material type, based on the number of pulses of the cooking vessel sensing signal output from the sensing output circuit 200b. In one example, the attenuation of the oscillation signal varies based on the equivalent resistance Req that fluctuates depending on the electromagnetic coupling between the cooking vessel and the heating coil 142 and the material type of the cooking vessel. The controller 500 determines the cooking vessel position and the cooking vessel material type quality based on the change in the cooking vessel sensing signal according to the fluctuating oscillation signal.

In the present embodiment, the controller 500 turns off the adjustment switch SW2 of the oscillation circuit 220 of the cooking vessel detection sensor 200, and determines that the cooking vessel is the cooking vessel of the first material type, based on the number of pulses of the cooking vessel sensing signal according to the variation of the oscillation signal resonating at a first oscillation frequency determined based on the inductance of the heating coil 142 and the capacitance of the first oscillation capacitor Ca via the turn-off of the adjustment switch SW2. In one example, the cooking vessel of the first material type may be exemplified as a ferromagnetic material vessel or a magnetic cooking vessel.

In addition, in the present embodiment, the controller 500 turns on the adjustment switch SW2 of the oscillation circuit 220 of the cooking vessel detection sensor 200, and determines that the cooking vessel is of the second material type, based on the number of pulses of the cooking vessel sensing signal according to the fluctuation of the oscillation signal resonating at a second oscillation frequency determined based on the capacitance of the first oscillation capacitor Ca and the second oscillation capacitor Cb connected in parallel to the inductance of the heating coil 142 via the turn-on of the adjustment switch SW2. In an example, the second oscillation frequency has a lower frequency value than the first oscillation frequency. The cooking vessel of the second material type may be exemplified as a paramagnetic material or a non-magnetic cooking vessel.

In the present embodiment, the cooking vessel detection sensor 200 may use the oscillation signal that resonates at the first oscillation frequency to detect the ferromagnetic vessel, and may use the oscillation signal that resonates at the second oscillation frequency lower than the first oscillation frequency to detect the paramagnetic vessel. The cooking vessel detection sensor 200 may periodically perform a process of detecting the cooking vessel position and the cooking vessel material type using the oscillation signal resonating at the first oscillation frequency or the second oscillation frequency.

The operation of the cooking vessel detection sensor 200 of the present disclosure will be described in a temporal flow manner as follows. First, the cooking vessel detection sensor 200 turns on the driving switch SW1 connected to the heating coil 142. Then, a predetermined amount of energy from the power voltage Vdd is stored in the sensing coil 143.

After a predetermined time duration has elapsed, the cooking vessel detection sensor 200 turns off the driving switch SW1. Then, the oscillation signal that resonates at the first oscillation frequency determined based on the first oscillation capacitor Ca of the oscillation circuit 220 connected in parallel to the heating coil 142 is output. In this regard, the attenuation of the oscillation signal varies based on the equivalent resistance Req that fluctuates according to the electromagnetic coupling between the cooking vessel and the heating coil 142 and according to the cooking vessel material type.

In this regard, the first oscillation frequency is calculated based on Equation $\dfrac{1}{2\pi\sqrt{L_{eq}C}}$ . In this regard, C denotes a capacitance value of the first oscillation capacitor Ca, and Leq denotes an equivalent inductance of the heating coil 142. The variation in the attenuation of the oscillation signal based on the equivalent resistance Req of the heating coil 142 is calculated based on Equation $\dfrac{R_{eq}}{2}\sqrt{\dfrac{C}{L_{eq}}}$ . In one example, the oscillation signal resonating at the first oscillation frequency is used to sense the ferromagnetic vessel.

Next, the cooking vessel detection sensor 200 filters the DC signal from the oscillation signal resonating at the first oscillation frequency, compares the filtered oscillation signal with the reference signal, and outputs the cooking vessel sensing signal according to the comparison result to the controller 500.

In the present embodiment, the controller 500 determines the cooking vessel position and the magnetism of the ferromagnetic material, based on the cooking vessel sensing signal according to the variation of the oscillation signal resonating at the first oscillation frequency. Thereafter, the controller 500 may drive the heating coil at the corresponding position to the cooking vessel of the ferromagnetic vessel at appropriate power to the ferromagnetic vessel.

Next, the cooking vessel detection sensor 200 turns on the adjustment switch SW2 of the oscillation circuit 220 to connect the first oscillation capacitor Ca and the second oscillation capacitor Cb in parallel with each other, thereby forming an equivalent capacitance.

Next, the cooking vessel detection sensor 200 turns on the driving switch SW1 connected to the heating coil 142. Then, a predetermined amount of energy from the power voltage Vdd is stored in the sensing coil 143.

After a predetermined time duration has elapsed, the cooking vessel detection sensor 200 turns off the driving switch SW1. Then, an oscillation signal that resonates at the second oscillation frequency determined based on the first oscillation capacitor Ca and the second oscillation capacitor Cb connected in parallel to the heating coil 142 is output. In this regard, the attenuation of the oscillation signal varies based on the equivalent resistance Req that fluctuates according to the electromagnetic coupling between the cooking vessel and the heating coil 142 and the cooking vessel material type.

In this regard, the second oscillation frequency is calculated based on Equation $\dfrac{1}{2\pi\sqrt{L_{eq}C}}$ . In this regard, C denotes a capacitance value of the first oscillation capacitor Ca and the second oscillation capacitor Cb connected in parallel with each other, and Leq denotes an equivalent inductance of the heating coil 142. The attenuation of the oscillation signal based on the equivalent resistance Req of the heating coil 142 is calculated based on Equation $\dfrac{R_{eq}}{2}\sqrt{\dfrac{C}{L_{eq}}}$ . In one example, the oscillation signal resonating at the second oscillation frequency is used to sense the paramagnetic vessel.

The cooking vessel detection sensor 200 filters the DC signal from the oscillation signal resonating at the second oscillation frequency, compares the filtered oscillation signal with the reference signal, and outputs the cooking vessel sensing signal according to the comparison result to the controller 500.

The controller 500 determines the position of the cooking vessel and the magnetism of the paramagnetic material based on the cooking vessel sensing signal according to the variation of the oscillation signal resonating at the second oscillation frequency. Thereafter, the controller 500 may drive the heating coil at the corresponding position to the paramagnetic vessel at appropriate power to the paramagnetic vessel.

The cooking vessel sensing operation may be periodically performed before induction heating and during the induction heating operation when the cooktop is powered on.

In the present embodiment, while at least one of the plurality of vessel detection sensors 200 detects the cooking vessel using the oscillation signal that freely resonates, the remaining vessel detection sensors discharge the energy charged in the heating coil 142. A first period T1 represents a period during which the heating coil 142 is charged with the oscillation energy. A second period T2 represents a period during which at least one of the position, size, and material of the cooking vessel is sensed and determined using the oscillation signal freely resonating. A third period T3 represents a discharge period during which the voltage induced in the heating coil 142 is discharged.

During the first period T1, the driving switch SW1 is turned on such that all of the plurality of vessel detection sensors 200 store the oscillation energy in the heating coil 142.

After a predetermined time duration has elapsed, the driving switch SW1 is turned off such that a target sensor among the plurality of vessel detection sensors 200 generates the oscillation signal that freely resonates during the second period T2. In this regard, the attenuation of the oscillation signal varies based on the equivalent resistance that fluctuates according to the electromagnetic coupling between the cooking vessel and the heating coil 142 and the material type of the cooking vessel. Then, the controller 500 determines at least one of the position, size, and material of the cooking vessel based on the cooking vessel sensing signal according to the oscillation signal that fluctuates based on the presence or absence of the cooking vessel and the material type thereof.

After a predetermined time duration has elapsed, the driving switch SW1 maintains the turn-on state in the remaining sensors during the third period T3, such that the energy according to the voltage induced in the heating coil 142 is discharged to the ground via the driving switch SW1.

As described above, the cooking vessel detection sensor 200 changes the oscillation frequency of the oscillation signal to detect the cooking vessel. The controller 500 determines the cooking vessel information including at least one of the position, material, shape, and size of the cooking vessel based on the cooking vessel sensing signal according to the variation of the equivalent resistance Req for each vessel material type according to the oscillation frequency.

The magnitude of the variation ratio of the equivalent resistance (Req) for each vessel material according to the oscillation frequency may be different. By using this, the larger the value of the variation ratio of the equivalent resistance Req, the higher the performance of determining the cooking vessel, so that the cooking vessel detection sensor 200 may detect the cooking vessel by adjusting the oscillation frequency during the cooking vessel sensing period.

In one example, the cooking vessel detection sensor 200 may use an oscillation signal that resonates at the first oscillation frequency to detect the ferromagnetic vessel, and may use an oscillation signal that resonates at the second oscillation frequency lower than the first oscillation frequency to detect the paramagnetic vessel. Specifically, the cooking vessel detection sensor 200 may detect the cooking vessel using a frequency of 300KHz to detect the ferromagnetic vessel made of, for example, iron, cobalt, nickel, silicon steel, cast iron, or clad, and may detect the cooking vessel using a frequency lower than 100KHz to detect the paramagnetic vessel made of, for example, aluminum, platinum, silver, or copper.

The criterion for classifying magnetic material type is determined based on the formation of the specific permeability. The specific permeability is the ratio of the permeability in the medium to the permeability in the vacuum, and indicates how many times the permeability in the medium is greater than the permeability in the vacuum. In the present specification, the ferromagnetic material may be defined as a material having a specific permeability much greater than 1. The ferromagnetic material has strong magnetic properties, and the magnetic properties thereof may be changed according to an external magnetic field and a temperature, and the ferromagnetic material maintains the magnetic properties even when the external magnetic field is removed therefrom. Iron, cobalt, nickel, and the like are typical ferromagnetic materials. The paramagnetic material may be defined as a material having a specific permeability equal to or slightly greater than 1. The paramagnetic material has a characteristic in which magnetic properties thereof are weak and magnetic properties thereof change easily depending on an external magnetic field or temperature. Aluminum, platinum, platinum, and the like are representative paramagnetic materials. The non-magnetic material may be defined as a material having a specific permeability equal to or lower than 1. The non-magnetic material weakly repels the magnetic field, and has a characteristic in which magnetism is very weak. Copper, silver, gold, and quartz are representative non-magnetic materials.

The controller 500 determines at least one of the cooking vessel position and the cooking vessel material type based on the number of pulses of the cooking vessel sensing signal output from the sensing output circuit 200b. In one example, the attenuation of the oscillation signal varies based on the equivalent resistance Req that varies according to the electromagnetic coupling between the cooking vessel and the heating coil 142 and the material type of the cooking vessel, and the controller 500 determines the cooking vessel position and the cooking vessel material type based on the change in the cooking vessel sensing signal according to the fluctuating oscillation signal.

Data on the variation ratio of the equivalent resistance Req for each vessel material type according to the oscillation frequency may be stored in the memory. The controller 500 may determine the cooking vessel material based on a comparing result of the data determined based on the cooking vessel sensing signal with the data on the equivalent resistance vibration ratio for each vessel material type as pre-stored in the memory.

As described above, according to the present disclosure, the change in the impedance of the heating coil may be sensed such that the cooking vessel may be sensed using the heating coil without the sensing coil. In addition, in the present disclosure, the controller may detect at least one of the position, size, and material type of the cooking vessel based on a detecting result of the change in the oscillation signal according to the change in the equivalent resistance of the heating coil.

A coil assembly according to one aspect of the present disclosure may include a plurality of heating coil layers stacked in a vertical direction and electrically connected to each other, wherein a plurality of heating coils used to sense a cooking vessel and heat the cooking vessel may be formed in each of the plurality of heating coil layers; and a wiring layer stacked on top of the stack of the plurality of heating coil layers, wherein a plurality of temperature sensors may be disposed in the wiring layer, and wirings of the plurality of temperature sensors and wirings of the plurality of heating coils may be formed in the wiring layer.

In accordance with one embodiment, each of the plurality of heating coils may be formed in a winding pattern, wherein at least heating coil layers may be electrically connected to each other.

In accordance with one embodiment, the pattern of each of the plurality of heating coils may wind a plurality of turns in one heating coil layer, wherein an inter-turn area may be formed between adjacent ones of the plurality of turns, wherein the temperature sensor may be disposed in the wiring layer and in an area overlapping the inter-turn area.

In accordance with one embodiment, a central area free of a pattern may be formed in a center of the pattern of each of the plurality of heating coils.

In accordance with one embodiment, the inter-turn area formed in an area in each of both opposing sides around the central area of the pattern of each of the plurality of heating coils may have a width greater than a width of the inter-turn area defined between adjacent turns of each heating coil in the area different from the area in each of both opposing sides.

In accordance with one embodiment, the inter-turn area may include different inter-turn areas having smaller and larger widths, wherein the temperature sensor may be disposed in the wiring layer and in an area overlapping the inter-turn area having the larger width.

In accordance with one embodiment, the plurality of temperature sensors may be spaced apart from each other by a predetermined distance.

In accordance with one embodiment, the plurality of heating coil layers and the wiring layer may be formed on the same substrate.

In accordance with one embodiment, each of the plurality of heating coil layers and the wiring layer may have at least one via extending therethrough in a vertical direction, wherein the heating coil and the wiring of the heating coil may be connected to each other in the vertical direction using the via.

In accordance with one embodiment, a non-pattern area may be formed in an area of each of the plurality of heating coils, and a non-pattern area may be formed in a boundary area between adjacent ones of the plurality of heating coils.

In accordance with one embodiment, at least four to at most six temperature sensors may be disposed in the non-pattern areas of two heating coils arranged in a left-right or front-rear direction among the plurality of heating coils, wherein the temperature sensor may not be disposed in a boundary area between the heating coils arranged in the left-right direction.

In accordance with one embodiment, when four heating coils are arranged in series or in parallel with each other, at least 12 to at most 14 temperature sensors may be disposed in the non-pattern areas of the four heating coils, and the temperature sensor may not be disposed in a boundary area between the heating coils arranged in a left-right direction.

A coil assembly in accordance with another aspect of the present disclosure may include a plurality of heating coil layers stacked in a vertical direction and electrically connected to each other, wherein a plurality of heating coils may be formed in each of the plurality of heating coil layers; a wiring layer stacked on top of the stack of the plurality of heating coil layers, wherein a plurality of temperature sensors may be disposed in the wiring layer, and wirings of the plurality of temperature sensors and wirings of the plurality of heating coils may be formed in the wiring layer; and a sensing coil layer disposed on top of the wiring layer, wherein a plurality of sensing coils may be disposed in the sensing coil layer.

In accordance with one embodiment, the plurality of heating coil layers and the wiring layer may be formed on the same substrate. In accordance with one embodiment, each of the plurality of heating coil layers and the wiring layer may have at least one via extending therethrough in a vertical direction, wherein the heating coil and the wiring of the heating coil may be connected to each other in the vertical direction using the via.

In accordance with one embodiment, the sensing coil layer may be formed on a substrate different from the substrate on which the plurality of heating coil layers and the wiring layer are formed.

In accordance with one embodiment, the sensing coil layer, the plurality of heating coil layers, and the wiring layer may be electrically connected to each other via a terminal.

A coil assembly in accordance with still another aspect of the present disclosure may include a plurality of heating coil layers stacked in a vertical direction and electrically connected to each other, wherein a plurality of heating coils may be formed in each of the plurality of heating coil layers; a wiring layer stacked on top of the stack of the plurality of heating coil layers, wherein wirings of the plurality of heating coils may be formed in the wiring layer; and a sensing coil layer disposed on top of the wiring layer, wherein a plurality of sensing coils may be disposed in the sensing coil layer, wherein each of a plurality of temperature sensors may be disposed in a central area of each of the plurality of sensing coils, wherein wirings of the plurality of temperature sensors may be disposed in the sensing coil layer.

In accordance with one embodiment, the plurality of heating coil layers and the wiring layer may be formed on the same substrate, wherein the sensing coil layer may be formed on a substrate different from the substrate on which the plurality of heating coil layers and the wiring layer are formed.

In accordance with one embodiment, each of the plurality of heating coil layers and the wiring layer may have at least one via extending therethrough in a vertical direction, wherein the heating coil and the wiring of the heating coil may be connected to each other in the vertical direction using the via.

Although the present disclosure has been described above with reference to the embodiments illustrated in the drawings, this is merely an example, and those skilled in the art will understand that various modifications and other equivalent embodiments may be derived therefrom. Accordingly, the true technical protection scope of the present disclosure should be determined based on the following claims.

**Claims**

1. A coil assembly comprising:

a plurality of heating coil layers stacked in a vertical direction and electrically connected to each other, wherein a plurality of heating coils used to sense a cooking vessel and heat the cooking vessel are formed in each of the plurality of heating coil layers; and

a wiring layer stacked on top of the stack of the plurality of heating coil layers, wherein a plurality of temperature sensors are disposed in the wiring layer, and wirings of the plurality of temperature sensors and wirings of the plurality of heating coils are formed in the wiring layer.

2. The coil assembly of claim 1, wherein each of the plurality of heating coils is formed in a winding pattern, wherein at least heating coil layers are electrically connected to each other.

3. The coil assembly of claim 2, wherein the pattern of each of the plurality of heating coils winds a plurality of turns in one heating coil layer,

wherein an inter-turn area is formed between adjacent ones of the plurality of turns,
wherein the temperature sensor is disposed in the wiring layer and in an area overlapping the inter-turn area.

4. The coil assembly of claim 1, wherein a central area free of a pattern is formed in a center of the pattern of each of the plurality of heating coils.

5. The coil assembly of claim 4, wherein the inter-turn area formed in an area in each of both opposing sides around the central area of the pattern of each of the plurality of heating coils has a width greater than a width of the inter-turn area defined between adjacent turns of each heating coil in the area different from the area in each of both opposing sides.

6. The coil assembly of claim 3, wherein the inter-turn area includes different inter-turn areas having smaller and larger widths, wherein the temperature sensor is disposed in the wiring layer and in an area overlapping the inter-turn area having the larger width.

7. The coil assembly of claim 1, wherein the plurality of temperature sensors are spaced apart from each other by a predetermined distance.

8. The coil assembly of claim 1, wherein the plurality of heating coil layers and the wiring layer are formed on the same substrate.

9. The coil assembly of claim 8, wherein each of the plurality of heating coil layers and the wiring layer has at least one via extending therethrough in a vertical direction,
wherein the heating coil and the wiring of the heating coil are connected to each other in the vertical direction using the via.

10. The coil assembly of claim 1, wherein a non-pattern area is formed in an area of each of the plurality of heating coils, and a non-pattern area is formed in a boundary area between adjacent ones of the plurality of heating coils.

11. The coil assembly of claim 10, wherein at least four to at most six temperature sensors are disposed in the non-pattern areas of two heating coils arranged in a left-right or front-rear direction among the plurality of heating coils,
wherein the temperature sensor is not disposed in a boundary area between the heating coils arranged in the left-right direction.

12. The coil assembly of claim 8, wherein when four heating coils are arranged in series or in parallel with each other, at least 12 to at most 14 temperature sensors are disposed in the non-pattern areas of the four heating coils, and the temperature sensor is not disposed in a boundary area between the heating coils arranged in a left-right direction.

13. A coil assembly comprising:

a plurality of heating coil layers stacked in a vertical direction and electrically connected to each other, wherein a plurality of heating coils are formed in each of the plurality of heating coil layers;
a wiring layer stacked on top of the stack of the plurality of heating coil layers, wherein a plurality of temperature sensors are disposed in the wiring layer, and wirings of the plurality of temperature sensors and wirings of the plurality of heating coils are formed in the wiring layer; and
a sensing coil layer disposed on top of the wiring layer, wherein a plurality of sensing coils are disposed in the sensing coil layer.

14. The coil assembly of claim 13, wherein the plurality of heating coil layers and the wiring layer are formed on the same substrate.

15. The coil assembly of claim 14, wherein each of the plurality of heating coil layers and the wiring layer has at least one via extending therethrough in a vertical direction,
wherein the heating coil and the wiring of the heating coil are connected to each other in the vertical direction using the via.

16. The coil assembly of claim 14, wherein the sensing coil layer is formed on a substrate different from the substrate on which the plurality of heating coil layers and the wiring layer are formed.

**17.** The coil assembly of claim 16, wherein the sensing coil layer, the plurality of heating coil layers, and the wiring layer are electrically connected to each other via a terminal.

**18.** A coil assembly comprising:

a plurality of heating coil layers stacked in a vertical direction and electrically connected to each other, wherein a plurality of heating coils are formed in each of the plurality of heating coil layers;

a wiring layer stacked on top of the stack of the plurality of heating coil layers, wherein wirings of the plurality of heating coils are formed in the wiring layer; and

a sensing coil layer disposed on top of the wiring layer, wherein a plurality of sensing coils are disposed in the sensing coil layer, wherein each of a plurality of temperature sensors is disposed in a central area of each of the plurality of sensing coils, wherein wirings of the plurality of temperature sensors are disposed in the sensing coil layer.

**19.** The coil assembly of claim 18, wherein the plurality of heating coil layers and the wiring layer are formed on the same substrate,

wherein the sensing coil layer is formed on a substrate different from the substrate on which the plurality of heating coil layers and the wiring layer are formed.

**20.** The coil assembly of claim 19, wherein each of the plurality of heating coil layers and the wiring layer has at least one via extending therethrough in a vertical direction,

wherein the heating coil and the wiring of the heating coil are connected to each other in the vertical direction using the via.

# FIG. 1

# FIG. 2

## FIG. 3

# FIG. 4

**FIG. 5**

**FIG. 6A**

## FIG. 6B

147L

**FIG. 7A**

143b'

147L

142a
142b
142c
142d
142e
142f
142g
142h
142i
142j

142

140

## FIG. 7B

143b'

# FIG. 8A

## FIG. 8B

147L'

## FIG. 8C

143a'

**FIG. 9**

142a~142j

**FIG. 10**

## FIG. 11

## FIG. 12

EP 4 773 734 A1

**FIG. 13**

## INTERNATIONAL SEARCH REPORT

| International application No. |
| --- |
| **PCT/KR2024/014232** |

| A. | CLASSIFICATION OF SUBJECT MATTER |
| --- | --- |

**H05B 6/12**(2006.01)i; **H05B 6/06**(2006.01)i; **F24C 15/34**(2006.01)i; **F24C 15/10**(2006.01)i; **F24C 3/12**(2006.01)i; **H02M 1/10**(2006.01)i

According to International Patent Classification (IPC) or to both national classification and IPC

| B. | FIELDS SEARCHED |
| --- | --- |

Minimum documentation searched (classification system followed by classification symbols)

H05B 6/12(2006.01); G01R 15/18(2006.01); G01V 3/10(2006.01); H05B 6/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가열(heating), 감지(presence), 온도(temperature), 레이어(layer), 코일(coil)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2016-085818 A (NGK SPARK PLUG CO., LTD.) 19 May 2016 (2016-05-19)<br>See paragraphs [0031] and [0034]; claims 1-10; and figures 5 and 7-8. | 1-4,7-10,13-20 |
| A | | 5-6,11-12 |
| Y | US 2022-0007470 A1 (BSH HAUSGERATE GMBH) 06 January 2022 (2022-01-06)<br>See paragraphs [0036], [0059], [0063], [0069] and [0073]; claims 15-30; and figures 3-8. | 1-4,7-10,13-20 |
| Y | EP 2312908 A1 (BSH BOSCH UND SIEMENS HAUSGERATE GMBH) 20 April 2011 (2011-04-20)<br>See paragraphs [0012], [0019], [0020] and [0021]; claims 1-3; and figures 1-5. | 3,10 |
| A | JP 2018-147762 A (HITACHI APPLIANCES INC.) 20 September 2018 (2018-09-20)<br>See paragraphs [0035] and [0041]; claims 1-2; and figures 2-6. | 1-20 |
| A | KR 10-2483449 B1 (SK MAGIC CO., LTD.) 30 December 2022 (2022-12-30)<br>See paragraphs [0034]-[0043]; claims 1-2, 4-6 and 10-13; and figures 1-2. | 1-20 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 December 2024** | **28 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/014232**

| Patent document cited in search report | | | Publication date (day/month/year) | Patent family member(s) | | | Publication date (day/month/year) |
|---|---|---|---|---|---|---|---|
| JP | 2016-085818 | A | 19 May 2016 | | None | | |
| US | 2022-0007470 | A1 | 06 January 2022 | EP | 3868176 | A1 | 25 August 2021 |
| | | | | ES | 2754877 | A1 | 20 April 2020 |
| | | | | WO | 2020-079625 | A1 | 23 April 2020 |
| EP | 2312908 | A1 | 20 April 2011 | EP | 2312908 | B1 | 02 August 2017 |
| | | | | ES | 2376566 | A1 | 15 March 2012 |
| | | | | ES | 2376566 | B1 | 29 January 2013 |
| | | | | ES | 2639022 | T3 | 25 October 2017 |
| JP | 2018-147762 | A | 20 September 2018 | JP | 6568885 | B2 | 28 August 2019 |
| KR | 10-2483449 | B1 | 30 December 2022 | | None | | |

Form PCT/ISA/210 (patent family annex) (July 2022)